# EUROPEAN PATENT APPLICATION

(11) **EP 3 388 989 A1**
(43) Date of publication of application: **17.10.2018**
(21) Application number: 18164448.5
(22) Date of filing: 28.03.2018
(51) Int. Cl.: G06Q 10/08, G06Q 50/28, G06K 9/62

(54) **REALOGRAM TO PLANOGRAM USER INTERFACE**

(30) Priority: 12.04.2017 US 201762484539 P; 30.06.2017 US 201715640398
(71) Applicant: Ricoh Company Ltd., Ohta-ku Tokyo 143-8555 (JP)
(72) Inventor: GRAHAM, Jamey, Cupertino, CA California 95014 (US); FINDLAY, Roland, Cupertino, CA California 95014 (US); GRIFFIN, Michael, Cupertino, CA California 95014 (US)
(74) Representative: Schwabe - Sandmair - Marx

(57) **Abstract**

A system and method that generates a planogram from a realogram is disclosed. The method includes receiving, from an image processing module, a realogram, the realogram including an image and information about a set of items recognized in the image, determining one or more linear groupings of a subset of the set of recognized items corresponding to each shelf, generating a planogram based on the realogram and the one or more linear groupings, generating a user interface for presentation on a client device of a user, presenting the realogram in a first portion of the user interface and the planogram in a second portion of the user interface, receiving user input via the user interface, and updating the planogram based on the user input.

## Description

### BACKGROUND OF THE INVENTION

### 1. Field of the Invention

The specification generally relates to generating a planogram for representing a structured positioning of items on shelves. In particular, the specification relates to a system and method for generating a user interface to facilitate a creation of a planogram based on a realogram of items on shelves in a retail store.

### 2. Description of the Related Art

A planogram is a data or visual representation of products in a retail environment. For example, a planogram may describe where in the retail environment and in what quantity products should be located. Such planograms are tools designed for increasing sales, managing inventory, and otherwise ensuring that the desired quantity and sizes of an item are placed to optimize, for example, profits. However, such planograms may not readily be available or used in some retail situations. Some retail stores may present and maintain adequate levels of stock on shelves, racks, and display stands without enforcing a planogram and be highly successful in moving more items than average without knowing why. While the location and quantity of products on the shelves in the retail stores can be manually tracked by a user, attempts are being made to automatically recognize the products and automatically or semi-automatically obtain information about the state and the configuration of products on the shelves in order to generate an optimized planogram that can be put to use.

Previous attempts at generating planograms have deficiencies. For example, one method is to place cameras in stores and watch customer behavior to develop customer driven planograms. In another example, one method is to send representatives into retail stores to create planograms manually with pen and paper. Unfortunately, planograms developed through such methods can be time consuming, unreliable, and impact the sales performance negatively.

### SUMMARY OF THE INVENTION

The techniques introduced herein overcome the deficiencies and limitations of the prior art, at least in part, with a system and method for generating a planogram. In one embodiment, the system includes one or more processors and a memory storing instructions which when executed cause the one or more processors to receive a realogram including an image and information about a set recognized items in the image, determine one or more linear groupings of a subset of the set of recognized items corresponding to each shelf, generate a planogram based on the realogram and the one or more linear groupings, generate a user interface for presentation on a client device of a user, present the realogram in a first portion of the user interface and the planogram in a second portion of the user interface, receive, from the user, user input via the user interface, and update the planogram based on the user input.

Other aspects include corresponding methods, systems, apparatuses, and computer program products for these and other innovative aspects.

The features and advantages described herein are not all-inclusive and many additional features and advantages will be apparent in view of the figures and description. Moreover, it should be noted that the language used in the specification has been principally selected for readability and instructional purposes and not to limit the scope of the techniques described.

### BRIEF DESCRIPTION OF THE DRAWINGS

The techniques introduced herein are illustrated by way of example, and not by way of limitation in the figures of the accompanying drawings in which like reference numerals are used to refer to similar elements.
Figure 1 is a high-level block diagram illustrating one embodiment of a system for generating a user interface for creating a planogram from a realogram.
Figure 2 is a block diagram illustrating one embodiment of a computing device including a planogram application.
Figures 3A-3B are graphical representations of one embodiment of a process for generating a planogram from a realogram of items on shelves.
Figures 4A-4G are graphical representations of one embodiment of a process for determining a linear group of items on shelves.
Figures 5A-5H are graphical representations of embodiments of a user interface for validating, adjusting, and arranging product images in a planogram.
Figures 6A-6E are graphical representations of embodiments of a user interface for displaying information related to the products.
Figures 7A-7D are graphical representations of embodiments of a user interface for generating a planogram from scratch.
Figure 8 is a flow diagram illustrating one embodiment of an example method for generating a planogram from a realogram of items on shelves.
Figure 9 is a flow diagram illustrating one embodiment of an example method for determining a linear group of items on shelves.

### DETAILED DESCRIPTION OF THE PREFERRED EMBODIMENTS

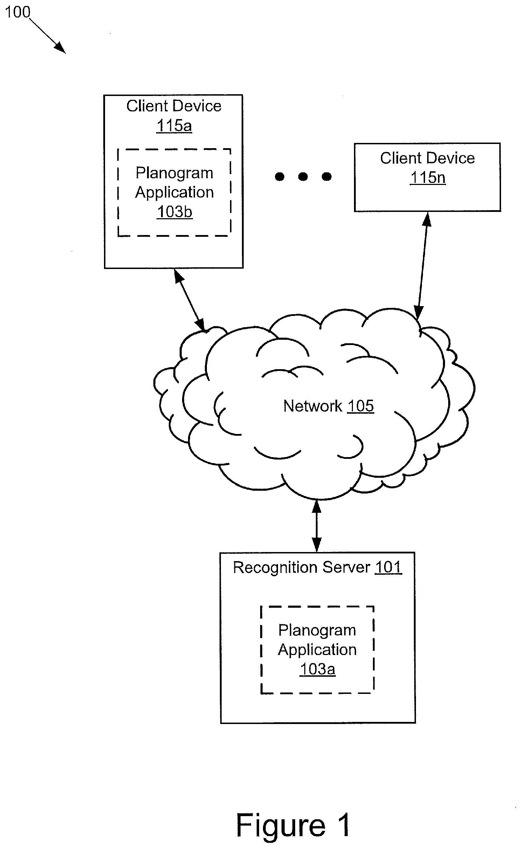

Figure 1 is a high-level block diagram illustrating one embodiment of a system 100 for generating a user interface for creating a planogram from a realogram. The illustrated system 100 may have one or more client devices 115a... 115n that can be accessed by users and a recognition server 101. In Figure 1 and the remaining figures, a letter after a reference number, e.g., "115a," represents a reference to the element having that particular reference number. A reference number in the text without a following letter, e.g., "115," represents a general reference to instances of the element bearing that reference number. In the illustrated embodiment, these entities of the system 100 are communicatively coupled via a network 105.

The network 105 can be a conventional type, wired or wireless, and may have numerous different configurations including a star configuration, token ring configuration, or other configurations. Furthermore, the network 105 may include a local area network (LAN), a wide area network (WAN) (e.g., the Internet), and/or other interconnected data paths across which multiple devices may communicate. In some embodiments, the network 105 may be a peer-to-peer network. The network 105 may also be coupled to or include portions of a telecommunications network for sending data in a variety of different communication protocols. In some embodiments, the network 105 may include Bluetooth communication networks or a cellular communications network for sending and receiving data including via short messaging service (SMS), multimedia messaging service (MMS), hypertext transfer protocol (HTTP), direct data connection, WAP, email, etc. Although Figure 1 illustrates one network 105 coupled to the client devices 115 and the recognition server 101, in practice one or more networks 105 can be connected to these entities.

In some embodiments, the system 100 includes a recognition server 101 coupled to the network 105. The recognition server 101 may be, or may be implemented by, a computing device including a processor, a memory, applications, a database, and network communication capabilities. In the example of Figure 1, the components of the recognition server 101 are configured to implement a planogram application 103a described in more detail below. In one embodiment, the recognition server 101 provides services to a consumer packaged goods (CPG) firm for identifying products on shelves, racks, or displays and determining a structured way to arrange a placement of the products (e.g., a planogram). While the examples herein describe recognition of products in an image of shelves, such as a retail display, it should be understood that the image may include any arrangement of organized objects or items. For example, the image may be of a warehouse, stockroom, store room, cabinet, etc. Similarly, the objects, in addition to retail products, may be tools, parts used in manufacturing, construction or maintenance, medicines, first aid supplies, emergency or safety equipment, etc.

In some embodiments, the recognition server 101 sends and receives data to and from other entities of the system 100 via the network 105. For example, the recognition server 101 sends and receives data including images to and from the client device 115. The images received by the recognition server 101 can include an image captured by the client device 115, an image copied from a website or an email, or an image from any other source. Although only a single recognition server 101 is shown in Figure 1, it should be understood that there may be any number of recognition servers 101 or a server cluster. The recognition server 101 may include data storage.

The client device 115 may be a computing device that includes a memory, a processor and a camera, for example a laptop computer, a desktop computer, a tablet computer, a mobile telephone, a smartphone, a personal digital assistant (PDA), a mobile email device, a webcam, a user wearable computing device or any other electronic device capable of accessing a network 105. The client device 115 provides general graphics and multimedia processing for any type of application. For example, the client device 115 may include a graphics processor unit (GPU) for handling graphics and multimedia processing. The client device 115 includes a display for viewing information provided by the recognition server 101. While Figure 1 illustrates two client devices 115a and 115n, the disclosure applies to a system architecture having one or more client devices 115.

The client device 115 is adapted to send and receive data to and from the recognition server 101. For example, the client device 115 sends a captured image to the recognition server 101 and the recognition server 101 provides data in JavaScript Object Notation (JSON) format about one or more objects recognized in the captured image to the client device 115. The client device 115 may support use of graphical application program interface (API) such as Metal on Apple iOS™ or RenderScript on Android™ for determination of feature location and feature descriptors during image processing.

The planogram application 103 may include software and/or logic to provide the functionality for generating a planogram from a realogram of items on shelves. A planogram can be described as a representation of a plan or a design of shelves that shows where each product or item should be placed on the physical shelves in the retail stores. In some embodiments, the planogram application 103 can be implemented using programmable or specialized hardware, such as a field-programmable gate array (FPGA) or an application-specific integrated circuit (ASIC). In some embodiments, the planogram application 103 can be implemented using a combination of hardware and software. In other embodiments, the planogram application 103 may be stored and executed on a combination of the client devices 115 and the recognition server 101, or by any one of the client devices 115 or recognition server 101.

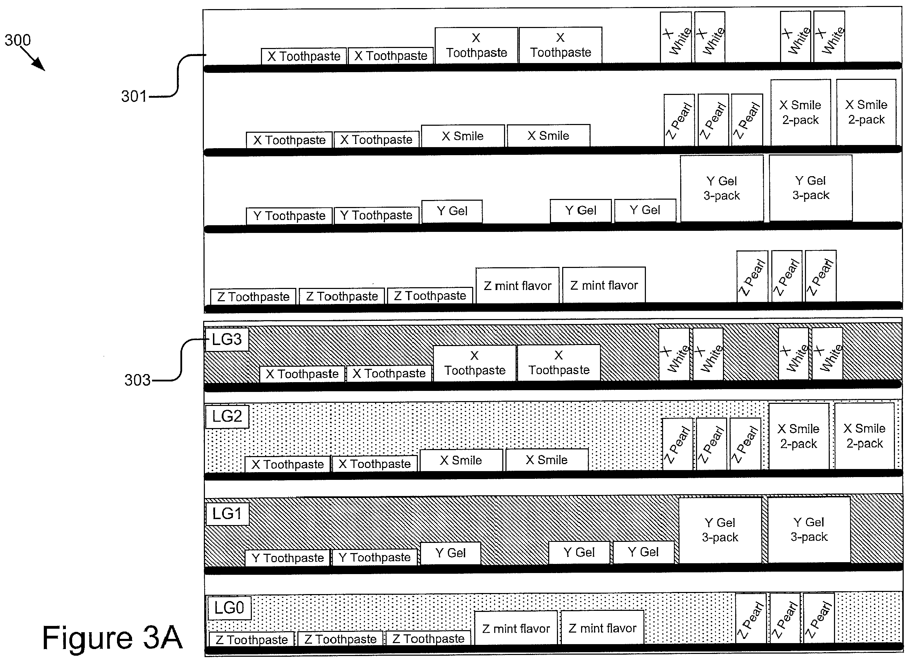

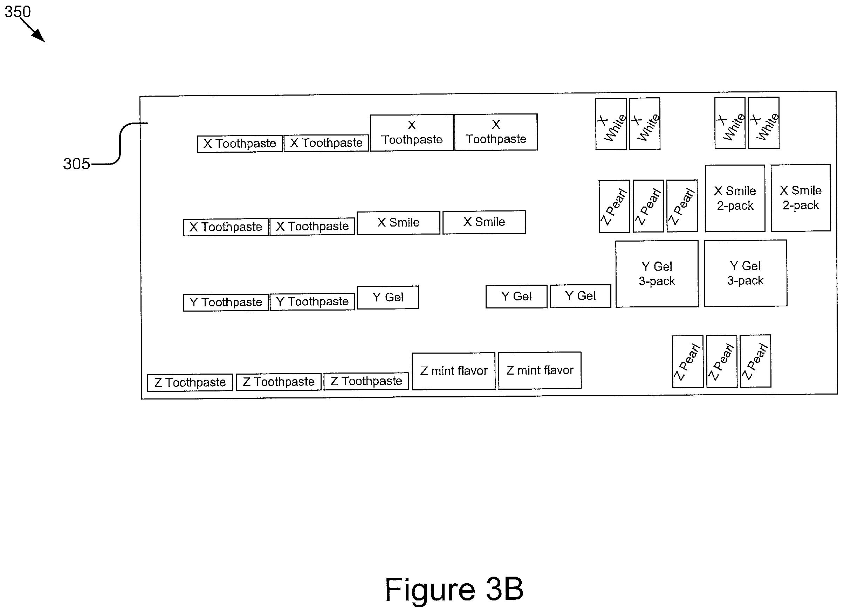

In some embodiments, the planogram application 103b may be a thin-client application with some functionality executed on the client device 115 and additional functionality executed on the recognition server 101 by the planogram application 103a. For example, the planogram application 103b on the client device 115 could include software and/or logic for capturing an image, transmitting the image to the recognition server 101, and displaying image recognition results. In another example, the planogram application 103a on the recognition server 101 could include software and/or logic for receiving a series of images, stitching the images into a larger composite image based on each received image having sufficient overlap with a previously received image in the series, and generating image recognition results for the composite image. In yet another example, the planogram application 103a on the recognition server 101 could include software and/or logic for generating a planogram from the image recognition results. The planogram application 103a or 103b may include further functionality described herein, such as, processing the image and performing feature identification. The operation of the planogram application 103 and the functions listed above are described below in more detail below with reference to Figures 3-9.

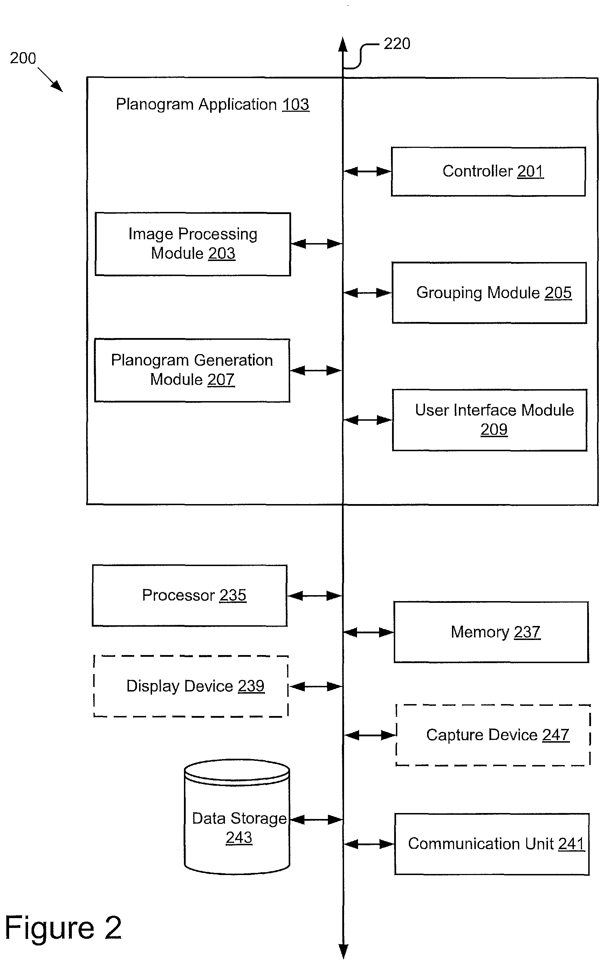

Figure 2 is a block diagram illustrating one embodiment of a computing device 200 including a planogram application 103. The computing device 200 may also include a processor 235, a memory 237, an optional display device 239, a communication unit 241, data storage 243, and an optional capture device 247 according to some examples. The components of the computing device 200 are communicatively coupled by a bus 220. The bus 220 may represent one or more buses including an industry standard architecture (ISA) bus, a peripheral component interconnect (PCI) bus, a universal serial bus (USB), or some other bus known in the art to provide similar functionality. In some embodiments, the computing device 200 may be the client device 115, the recognition server 101, or a combination of the client device 115 and the recognition server 101. In such embodiments where the computing device 200 is the client device 115 or the recognition server 101, it should be understood that the client device 115, and the recognition server 101 may include other components described above but not shown in Figure 2.

The processor 235 may execute software instructions by performing various input/output, logical, and/or mathematical operations. The processor 235 may have various computing architectures to process data signals including, for example, a complex instruction set computer (CISC) architecture, a reduced instruction set computer (RISC) architecture, and/or an architecture implementing a combination of instruction sets. The processor 235 may be physical and/or virtual, and may include a single processing unit or a plurality of processing units and/or cores. In some implementations, the processor 235 may be capable of generating and providing electronic display signals to a display device, supporting the display of images, capturing and transmitting images, performing complex tasks including various types of feature extraction and sampling, etc. In some implementations, the processor 235 may be coupled to the memory 237 via the bus 220 to access data and instructions therefrom and store data therein. The bus 220 may couple the processor 235 to the other components of the computing device 200 including, for example, the memory 237, the communication unit 241, the planogram application 103, and the data storage 243. It will be apparent to one skilled in the art that other processors, operating systems, sensors, displays, and physical configurations are possible.

The memory 237 may store and provide access to data for the other components of the computing device 200. The memory 237 may be included in a single computing device or distributed among a plurality of computing devices as discussed elsewhere herein. In some implementations, the memory 237 may store instructions and/or data that may be executed by the processor 235. The instructions and/or data may include code for performing the techniques described herein. For example, in one embodiment, the memory 237 may store the planogram application 103. The memory 237 is also capable of storing other instructions and data, including, for example, an operating system, hardware drivers, other software applications, databases, etc. The memory 237 may be coupled to the bus 220 for communication with the processor 235 and the other components of the computing device 200.

The memory 237 may include one or more non-transitory computer-usable (e.g., readable, writeable) device, a static random access memory (SRAM) device, a dynamic random access memory (DRAM) device, an embedded memory device, a discrete memory device (e.g., a PROM, FPROM, ROM), a hard disk drive, an optical disk drive (CD, DVD, Blu-ray™, etc.) mediums, which can be any tangible apparatus or device that can contain, store, communicate, or transport instructions, data, computer programs, software, code, routines, etc., for processing by or in connection with the processor 235. In some implementations, the memory 237 may include one or more of volatile memory and non-volatile memory. It should be understood that the memory 237 may be a single device or may include multiple types of devices and configurations.

The display device 239 is a liquid crystal display (LCD), light emitting diode (LED) or any other similarly equipped display device, screen or monitor. The display device 239 represents any device equipped to display user interfaces, electronic images, and data as described herein. In different embodiments, the display is binary (only two different values for pixels), monochrome (multiple shades of one color), or allows multiple colors and shades. The display device 239 is coupled to the bus 220 for communication with the processor 235 and the other components of the computing device 200. It should be noted that the display device 239 is shown in Figure 2 with dashed lines to indicate it is optional. For example, where the computing device 200 is the recognition server 101, the display device 239 is not part of the system, where the computing device 200 is the client device 115, the display device 239 is included and is used to display images and associated recognition results.

The communication unit 241 is hardware for receiving and transmitting data by linking the processor 235 to the network 105 and other processing systems. The communication unit 241 receives data such as requests from the client device 115 and transmits the requests to the controller 201, for example a request to process an image. The communication unit 241 also transmits information including recognition results to the client device 115 for display, for example, in response to processing the image. The communication unit 241 is coupled to the bus 220. In one embodiment, the communication unit 241 may include a port for direct physical connection to the client device 115 or to another communication channel. For example, the communication unit 241 may include an RJ45 port or similar port for wired communication with the client device 115. In another embodiment, the communication unit 241 may include a wireless transceiver (not shown) for exchanging data with the client device 115 or any other communication channel using one or more wireless communication methods, such as IEEE 802.11, IEEE 802.16, Bluetooth® or another suitable wireless communication method.

In yet another embodiment, the communication unit 241 may include a cellular communications transceiver for sending and receiving data over a cellular communications network such as via short messaging service (SMS), multimedia messaging service (MMS), hypertext transfer protocol (HTTP), direct data connection, WAP, e-mail or another suitable type of electronic communication. In still another embodiment, the communication unit 241 may include a wired port and a wireless transceiver. The communication unit 241 also provides other conventional connections to the network 105 for distribution of files and/or media objects using standard network protocols such as TCP/IP, HTTP, HTTPS, and SMTP as will be understood to those skilled in the art.

The data storage 243 is a non-transitory memory that stores data for providing the functionality described herein. The data storage 243 may be a dynamic random access memory (DRAM) device, a static random access memory (SRAM) device, flash memory, or some other memory devices. In some embodiments, the data storage 243 also may include a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

In the illustrated embodiment, the data storage 243 is communicatively coupled to the bus 220. The data storage 243 stores data for analyzing a received image and results of the analysis and other functionality as described herein. For example, the data storage 243 may store a database table or templates for a plurality of stock keeping units for image recognition purposes. A stock keeping unit (SKU) is a distinct item, such as a product offered for sale. The database table includes all attributes that makes the item distinguishable as a distinct product from all other items. For example, the attributes include a unique identifier (e.g., Universal Product Code (UPC)), product name, physical dimensions (e.g., width, height, depth, etc.), size (e.g., liters, gallons, ounces, pounds, kilograms, fluid ounces, etc.), facing side (e.g., front, back, side, top, bottom, etc.), description, brand manufacturer, color, packaging version, material, model number, price, discount, base image, etc. The term stock keeping unit or SKU may also refer to a unique identifier that refers to the particular product or service in the inventory. In some embodiments, the data storage 243 stores a received image, the set of features determined for the received image, and a realogram associated with the received image. The data storage 243 may similarly store one or more planograms. Additionally, the data storage 243 may store datasets used in evaluating the one or more planograms. The data stored in the data storage 243 is described below in more detail.

The capture device 247 may be operable to capture an image or data digitally of an object of interest. For example, the capture device 247 may be a high definition (HD) camera, a regular 2D camera, a multi-spectral camera, a structured light 3D camera, a time-of-flight 3D camera, a stereo camera, a standard smartphone camera, or a wearable computing device. The capture device 247 is coupled to the bus to provide the images and other processed metadata to the processor 235, the memory 237, or the data storage 243. It should be noted that the capture device 247 is shown in Figure 2 with dashed lines to indicate it is optional. For example, where the computing device 200 is the recognition server 101, the capture device 247 is not part of the system, where the computing device 200 is the client device 115, the capture device 247 is included and is used to provide images and other metadata information described below.

In some embodiments, the planogram application 103 may include a controller 201, an image processing module 203, a grouping module 205, a planogram generation module 207, and a user interface module 209. The components of the planogram application 103 are communicatively coupled via the bus 220. The components of the planogram application 103 may each include software and/or logic to provide their respective functionality. In some embodiments, the components of the planogram application 103 can each be implemented using programmable or specialized hardware including a field-programmable gate array (FPGA) or an application-specific integrated circuit (ASIC). In some embodiments, the components of the planogram application 103 can each be implemented using a combination of hardware and software executable by the processor 235. In some embodiments, the components of the planogram application 103 may each be stored in the memory 237 and be accessible and executable by the processor 235. In some embodiments, the components of the planogram application 103 may each be adapted for cooperation and communication with the processor 235, the memory 237, and other components of the planogram application 103 via the bus 220.

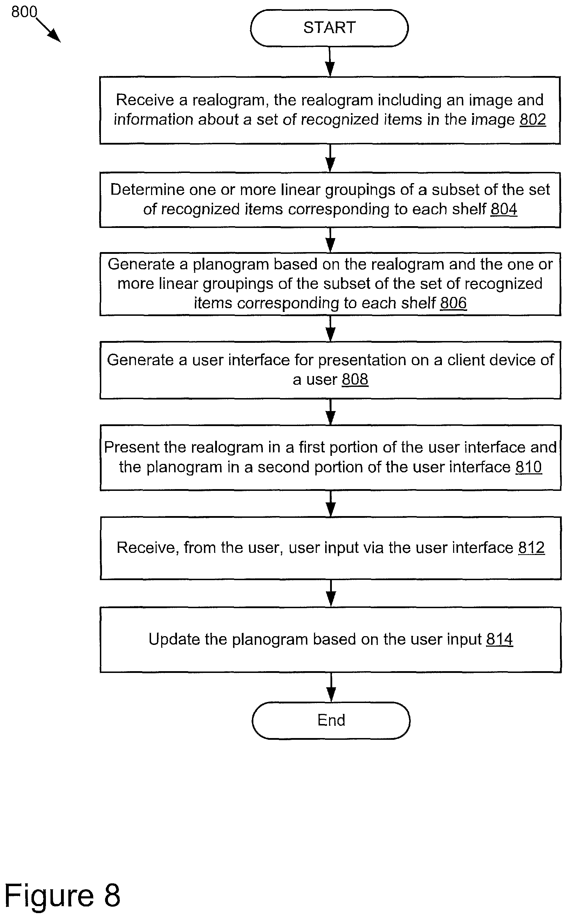

The controller 201 may include software and/or logic to control the operation of the other components of the planogram application 103. The controller 201 controls the other components of the planogram application 103 to perform the methods described below with reference to Figures 8-9. The controller 201 may also include software and/or logic to provide the functionality for handling communications between the planogram application 103 and other components of the computing device 200 as well as between the components of the planogram application 103.

In some embodiments, the controller 201 sends and receives data, via the communication unit 241, to and from one or more of the client device 115 and the recognition server 101. For example, the controller 201 receives, via the communication unit 241, an image from a client device 115 operated by a user and sends the image to the image processing module 203. In another example, the controller 201 receives data for providing a graphical user interface to a user from the user interface module 209 and sends the data to a client device 115, causing the client device 115 to present the user interface to the user.

In some embodiments, the controller 201 receives data from other components of the planogram application 103 and stores the data in the data storage 243. For example, the controller 201 receives data including features identified for an image from the image processing module 203 and stores the data in the data storage 243. In other embodiments, the controller 201 retrieves data from the data storage 243 and sends the data to other components of the planogram application 103. For example, the controller 201 retrieves data including an item or product from the data storage 243 and sends the retrieved data to the planogram generation module 207.

In some embodiments, the communications between the planogram application 103 and other components of the computing device 200 as well as between the components of the planogram application 103 can occur autonomously and independent of the controller 201.

The image processing module 203 may include software and/or logic to provide the functionality for receiving and processing one or more images of shelves from the client device 115. For example, the images may be images depicting a current layout of items on a set of shelves in one or more retail stores. If a planogram for the set of shelves is not available or up-to-date, the images serve as a starting point in determining a corresponding planogram.

In some embodiments, the image processing module 203 receives one or more images of a set of shelves from the client device 115. The images may be received for recognition and may include multiple items of interest. For example, the image can be an image of packaged products on a set of shelves (e.g., coffee packages, breakfast cereal boxes, soda bottles, etc.) which reflects a real-time placement and movement of packaged products on the shelves inside a retail store. A packaged product of a brand manufacturer may include textual and pictorial information printed on its surface that distinguishes it from packaged products belonging to one or more other brand manufacturers. The packaged products may also sit in an orientation on the shelf exposed to the user looking at the shelf. For example, a box-like packaged product might be oriented with the front, the back, the side, the top, or the bottom of the product exposed to the user looking at the shelf. It should be understood that there can be other products displayed on shelves without having a package.

In some embodiments, the image processing module 203 determines whether successful recognition is likely on the received image and instructs the user interface module 209 to generate graphical data including instructions for the user to retake the image if a section of the image captured by the client device 115 has limited information for complete recognition (e.g., a feature rich portion is cut off), the image is too blurry, the image has an illumination artifact (e.g., excessive reflection), etc. In some embodiments, the image processing module 203 may receive a sequence of individual and sufficiently overlapping images of the set of shelves. For example, the overlap between the individual images can be 40%-50%. The image processing module 203 stitches the individual images into a single linear panoramic image (e.g., a composite image) and performs image recognition on the stitched image. There can be geometric distortion and other artifacts visible in the stitched image and ultimately the realogram based on the stitched image. The geometric distortion is due to the fact that the position of the client device 115 with respect to the shelves varies every time an individual image is captured by the client device 115 and stitched into the composite image. The physical dimensions of one or more shelves are unknown in the stitched image. In other embodiments, the image processing module 203 may receive a single image as it is without any distortion.

In some embodiments, the image processing module 203 determines a set of features for the image. For example, the image processing module 203 may determine a location (X-Y coordinates), an orientation, and an image descriptor for each feature identified in the image. In some embodiments, the image processing module 203 uses corner detection algorithms for determining feature location. For example, the corner detection algorithms can include Shi-Tomasi corner detection algorithm, Harris and Stephens corner detection algorithm, etc. In some embodiments, the image processing module 203 uses feature description algorithms for determining efficient image feature descriptors. For example, the feature description algorithms may include Binary Robust Independent Elementary Features (BRIEF), Scale-Invariant Feature Transform (SIFT), etc. An image descriptor of a feature may be a 256-bit bitmask which describes the image sub-region covered by the feature. In some embodiments, the image processing module 203 may compare each pair of 256 pixel pairs near the feature for intensity and based on each comparison, the image processing module 203 may set or clear one bit in the 256-bit bitmask.

In some embodiments, the image processing module 203 matches the features of the image with the features of templates associated with a plurality of items for performing image recognition. For example, the image processing module 203 uses the database table storing information for products in the data storage 243 for analyzing the features of the image. The image processing module 203 identifies a region of interest (ROI) bordering each of the matched items in the image. A region of interest can be of any shape, for example, a polygon, a circle with a center point and a diameter, a rectangle having a width, a height and one or more reference points for the region (e.g., a center point, one or more corner points for the region), etc. For example, the region of interest may be a recognition rectangle bordering the matched item in its entirety. In another example, the region of interest may border the exposed label containing pictorial and textual information associated with the matched item.

In some embodiments, the image processing module 203 recognizes an item or product associated with the region of interest based on matching the image features from the image with the template features stored for a plurality of items. The image processing module 203 determines the symbolic information or metadata in association with a recognition result for an identified item. The symbolic information may include a Universal Product Code (UPC), position (e.g., position in relative X-Y coordinates, a slot position on a shelf, a particular shelf off the ground, etc.), facing side (e.g., top, bottom, front, back, or side) and dimensions (e.g., width, height, etc.) of the region of interest, and other metadata (e.g., packaging version). In some embodiments, the image processing module 203 determines the coordinate position and the dimensions of the items recognized in the image in relative units. The relative units do not correspond to physical dimensions, such as inches.

In some embodiments, the image processing module 203 determines a realogram of the items on shelves based on the image. The realogram may include the symbolic information of the plurality of non-contiguous items recognized in the image. In some embodiments, the image processing module 203 sends data including the realogram to the grouping module 205, planogram generation module 207 and the user interface module 209. In other embodiments, the image processing module 203 stores the data including the realogram in the data storage 243.

The grouping module 205 may include software and/or logic to provide the functionality for determining a linear group of a subset of identified items in the realogram. A linear group can be described as a horizontal collection or grouping of recognized items that are linearly co-occurring on a shelf in the realogram. In some embodiments, a linear group corresponds to a shelf in the realogram and is used in the generation of the planogram from the realogram. As shown in the examples of Figures 3A-3B, the graphical representations illustrate one embodiment of a process for generating a planogram from a realogram of items on shelves. In Figure 3A, the graphical representation 300 includes a realogram 301 of items on shelves. The graphical representation 300 identifies a set of four linear groups 303 starting from the bottom shelf in the realogram 301. Each linear group 303 highlighted as shown in the graphical representation 300 groups a subset of recognized items on the corresponding shelf. Typically, an accurate number of linear groups in the realogram can be identified when the corresponding planogram is available. For example, if the grouping module 205 determines that there can only be four shelves in a realogram as suggested by the data structure in the corresponding planogram, the grouping module 205 attempts to fit the recognized items in the realogram to only four linear groups based on the positions of the recognized items in the realogram. In some embodiments, the planogram data structure also suggests a number of items on each shelf which the grouping module 205 uses to determine the linear groups.

In Figure 3B, the graphical representation 350 illustrates a planogram 305 that is representative of the realogram 301 from which it is generated. A planogram includes attributes, such as perfect image (no capture noise), perfect image alignment, a single representative item in a facing and perfect image recognition. When a corresponding planogram for a realogram is absent or unavailable, the determination of linear groups in the realogram is error-prone.

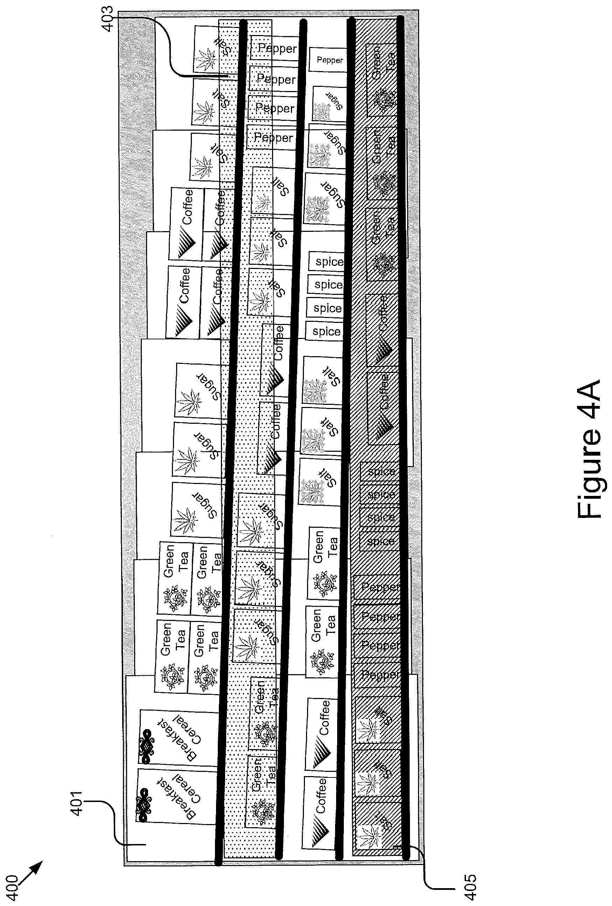

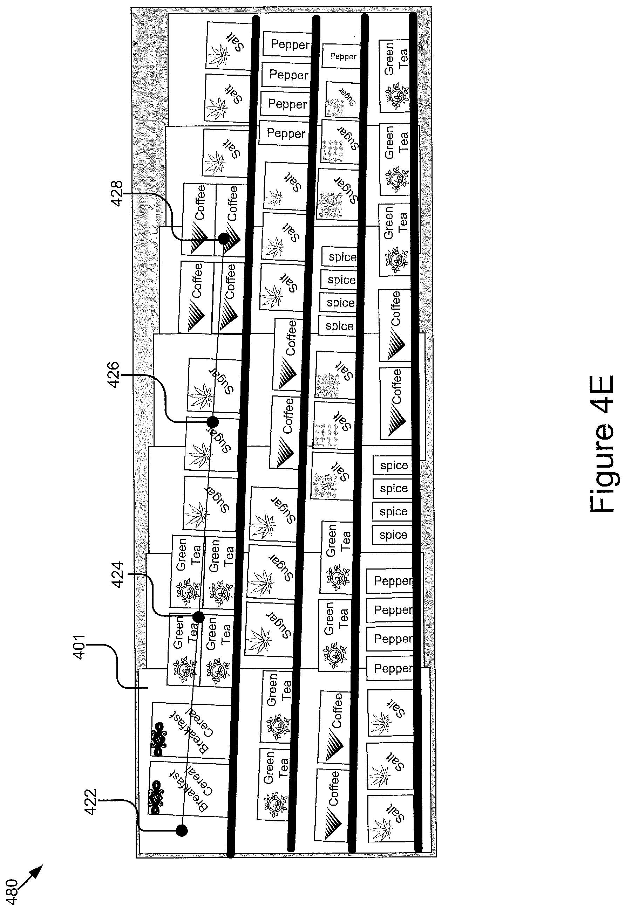

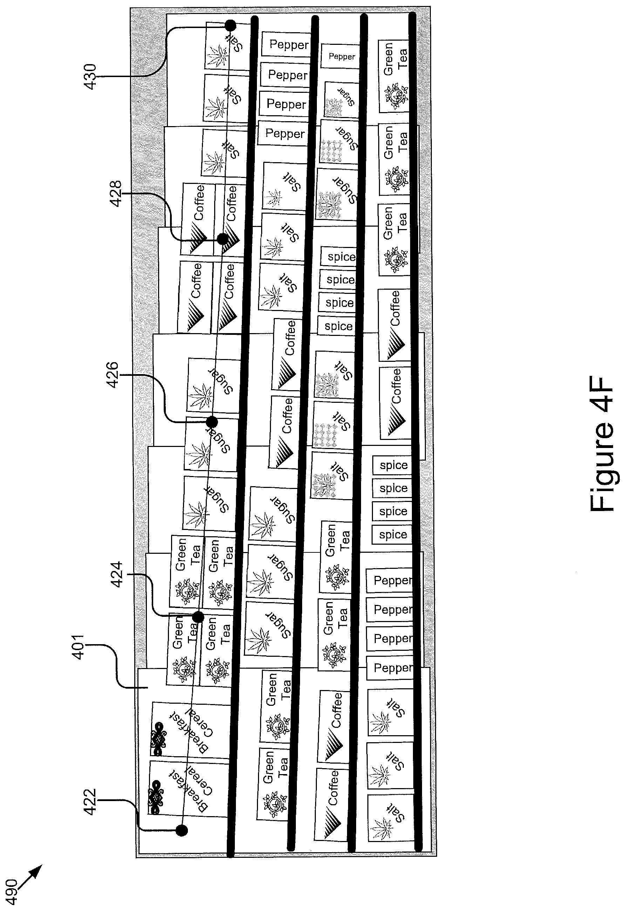

In some embodiments, the grouping module 205 determines one or more linear groups in the realogram without the planogram. For example, the planogram is not readily available. The grouping module 205 receives a realogram including recognition results for items from the image processing module 203. Such realogram may be based on a stitched image and the stitched image may be less rectangular and skewed. Figures 4A-4G are graphical representations that illustrate one embodiment of a process for determining a linear group of items on shelves. As shown in the example of Figure 4A, the graphical representation 400 shows a realogram 401 that appears skewed along the shelves toward the right because the realogram 401 is stitched from multiple overlapping images. The graphical representation 400 includes a placement of a strictly rectangular linear group 403 on a second shelf in the realogram 401. The linear group 403 starts off well at one end of the second shelf to map the second shelf but it eventually runs into the first shelf towards the other end of the realogram 401. The linear group 403 fails to properly map or group the recognized items on the second shelf. The graphical representation 400 also includes a polygonal linear group 405 on the bottom shelf The linear group 405 is flexible to adapt to the irregularity of the realogram and accurately maps or groups the linear group on the bottom shelf. The grouping module 205 uses a flexible, adjustable polygonal shaped linear group to group or combine the recognized items into a correct shelf grouping used for the generation of the planogram.

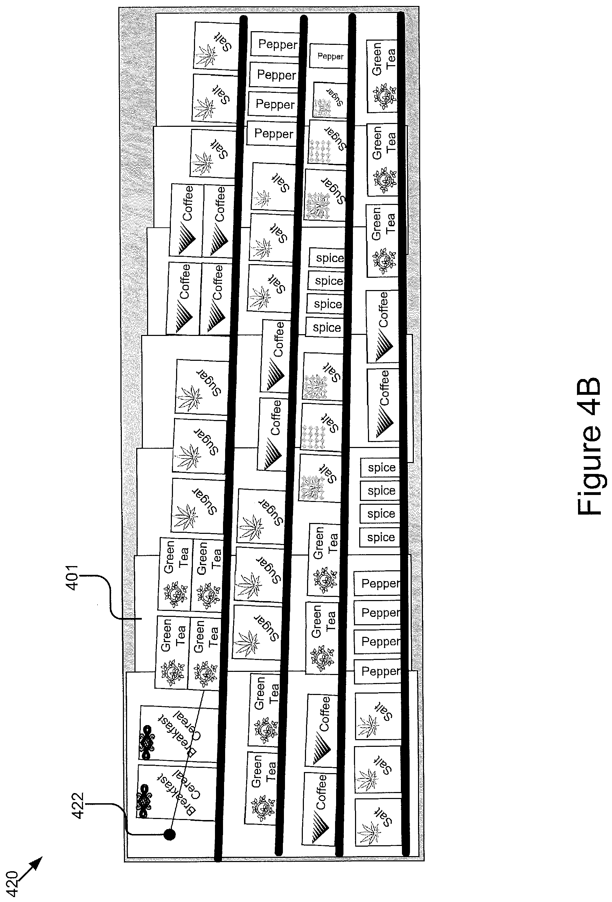

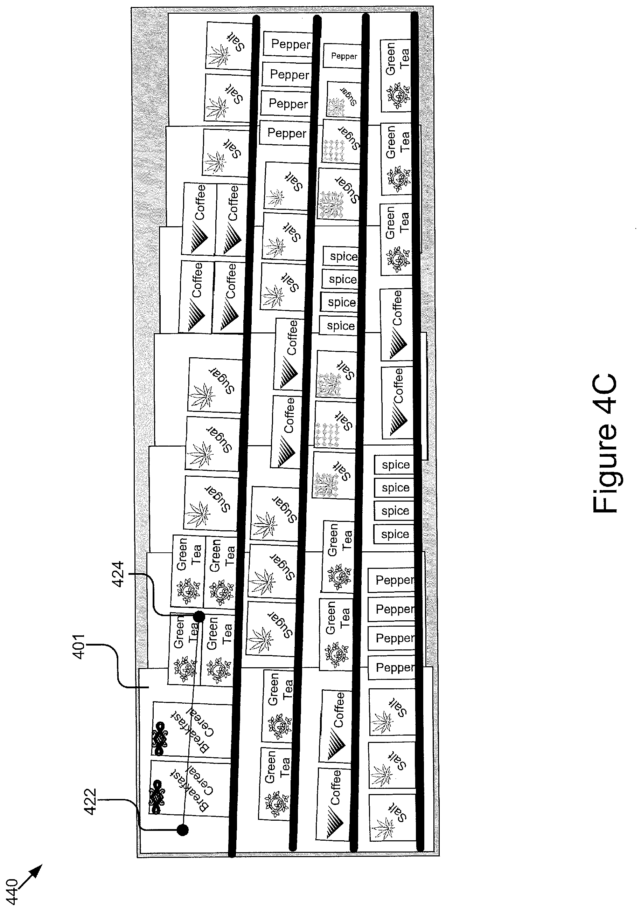

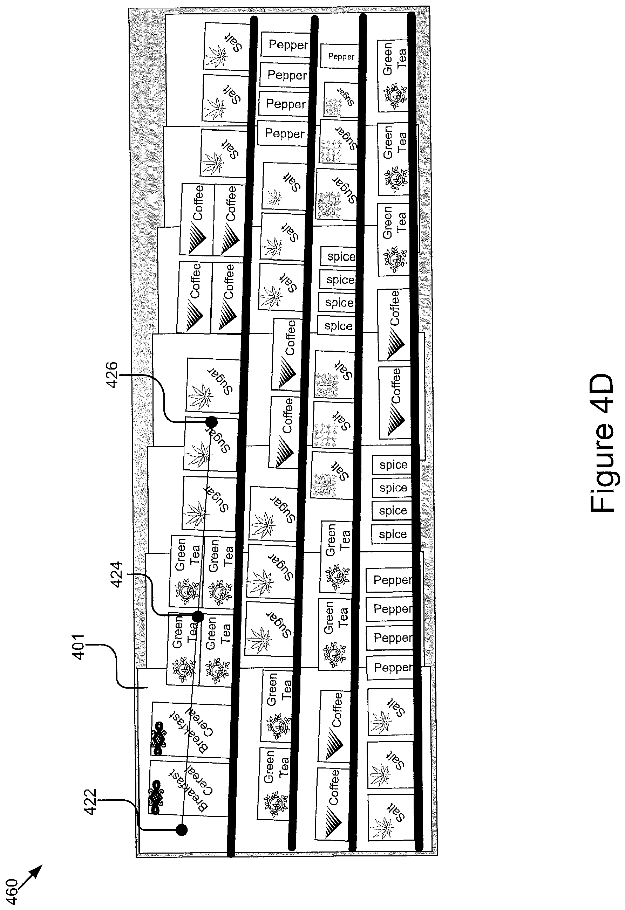

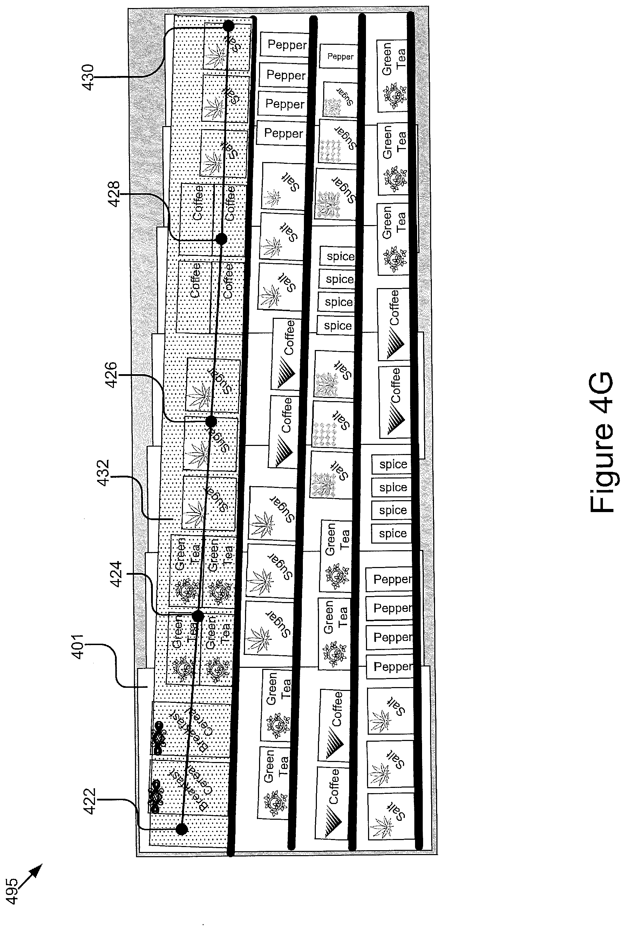

In some embodiments, the grouping module 205 sends instructions to the user interface module 209 to generate a user interface for creating and/or editing a linear group on top of the realogram. The grouping module 205 receives user input on the user interface for creating and/or editing the linear group in the realogram. As shown in the example of Figures 4B-4G, the graphical representations illustrate progressively receiving a selection of two or more anchor points 422-430 on the realogram 401 from the user. In Figure 4B, the graphical representation 420 shows a user selection of a first anchor point 422 on the left edge of the top shelf in the realogram 401. In Figure 4C, the graphical representation 440 shows the user selection of a second anchor point 424 to the right of the first anchor point 422 on the top shelf of the realogram 401. The first anchor point 422 is connected to the second anchor point 424 in a line. Similarly, the graphical representations of Figures 4D-4F show the user selection of anchor points 426, 428, and 430 to the right on the top shelf of the realogram 401. The anchor points 422, 424, 426, 428, and 430 get connected to form a line from the left to the right of the top shelf. The line passes through the recognized items co-occurring on the top shelf. In a best-case scenario, the user selection of the anchor point 422 on the left edge of the shelf and the user selection of the anchor point 430 on the right edge of the shelf forms the line from the left to right of the shelf connecting all the recognized items. If the realogram 401 is skewed as shown in the Figures 4A-4G, more than two anchor points may be selected by the user to form the line connecting all the recognized items co-occurring on the shelf. The grouping module 205 determines a linear group of the recognized items based on the user input of the two or more anchor points on the realogram. In Figure 4G, the graphical representation 495 shows the linear group 432 created based on the line connecting the anchor points 422, 424, 426, 428, and 430. The grouping module 205 sends instructions to the user interface module 209 to highlight the linear group for the user. For example, the linear group 432 can be highlighted in color, for example, green. It can be transparent to show the grouping of the recognized items that are co-occurring together on the top shelf in the realogram 401. The grouping module 205 receives user validation relating to the linear group. For example, if the linear group 432 appears to miss one or more recognized items from being grouped together, the grouping module 205 receives validation input from the user. The user can adjust any of the anchor points 422, 424, 426, 428, and 430, or create more anchor points to sufficiently include the ungrouped recognized items in the linear group 432. The grouping module 205 extends and/or adjusts the length of the line accordingly to connect the newly created anchor points. In addition, the linear group 432 can highlight the recognized items with bounding boxes of the same color around the recognized items grouped within the linear group 432. A different linear group created in a similar way and adjacent to the linear group 432 may highlight the recognized items with bounding boxes of a different color to sufficiently distinguish between the adjacent shelves of recognized items. It should be understood that the user selection of anchor points can also begin from the right edge of the top shelf in the realogram 401 for creating the linear group 432.

In some embodiments, the grouping module 205 numbers the linear groups in the realogram. As shown in the example of Figure 3A, the grouping module 205 identifies the linear groups from bottom to top with the bottom-most linear group identified as 'LG 0' and the top-most shelf linear group identified as 'LG 3.' Other forms of identification of the shelves may be possible. For example, the grouping module 205 may number the linear groups from top to bottom. In some embodiments, the grouping module 205 sends data including the identified linear groups to the planogram generation module 207 and the user interface module 209. In other embodiments, the grouping module 205 stores the data including the identified linear groups in the data storage 243.

The planogram generation module 207 may include software and/or logic to provide the functionality for generating a planogram from a realogram. In some embodiments, the planogram generation module 207 receives the realogram including recognition results for items from the image processing module 203. In some embodiments, the realograms may be associated with a single retail store or multiple retail stores. In some embodiments, the planogram generation module 207 generates a planogram by normalizing the realogram, as described in more detail below.

In some embodiments, the planogram generation module 207 identifies a plurality of facings in the realogram based on the recognition results of the items. A facing can be a vertical stacking of one or more items on a shelf turned out towards the customer. For example, a set of toothpaste products, each in a box-like package, may be stacked on top of one another to form a facing at a single position of the shelf. The one or more items in the facing are designed to represent an identical product (or same SKUs). Recognized items in the realogram can be associated with a region of interest that corresponds to the location (e.g., in relative X-Y coordinates) of the recognized item in the realogram. A facing may include multiple regions of interest corresponding to multiple items in the facing or a facing may include a single region of interest. However, if there is an item that is unrecognized, the item may not have a corresponding region of interest. An item may go unrecognized by the image processing module 203 for several reasons. For example, the image features determined for the item may not be sufficient for recognition due to distortion present in the image. In another example, the item may be a new item not yet indexed into the product database in the data storage 243. Also, if the items get misplaced on the shelves, the facing may become mixed. For example, a toothpaste brand 'X' may be misplaced on top of the toothpaste brand 'Y' in the facing meant for the toothpaste brand 'Y' and thus the facing can become a mixed facing.

Typically, a planogram may have one item represented at each position on the set of shelves. That is, a planogram does not display a stack of items as a facing. Rather, the planogram displays only a single image of an item representing the stack. In the process of generating a planogram, in some embodiments, the planogram generation module 207 identifies a confidence score of the recognition associated with one or more matched items in a facing. The planogram generation module 207 uses the confidence scores to determine a best recognition to assign to each of the plurality of facings present in the realogram.

In some embodiments, the planogram generation module 207 determines a recognition to assign to a facing based on the number of recognitions for each item in the facing. For example, if there are three items stacked in a mixed facing, the planogram generation module 207 identifies that recognition result for two of the items relate to a stock keeping unit (SKU) "X Toothpaste" and a recognition result for one of the items to a SKU "Y Toothpaste." The planogram generation module 207 performs a weighting of the recognition associated with the three items within the facing and determines SKU "Toothpaste X" as the most likely recognition of each item in the facing. In other embodiments, the planogram generation module 207 uses an identity of the recognized items in neighboring facings to verify which candidate recognition of an item to recommend as the most likely item for a facing under consideration.

In some embodiments, the planogram generation module 207 associates the recognition for the identified facing to an item in the facing. For example, the planogram generation module 207 associates the recognition as a representative item of the facing in the realogram. In some embodiments, the planogram generation module 207 removes other items from the identified facing in the realogram after a recognition of an item is applied to the facing. For example, the planogram generation module 207 removes other items present in the stack of the identified facing in the realogram. In some embodiments, the planogram generation module 207 retrieves an image of the item corresponding to the best recognition from the product database in the data storage 243 and replaces the recognized item within the region of interest with the image of the retrieved item. For example, the planogram generation module 207 removes the pixel information within the region of interest, retrieves a copy of the image of the retrieved item, and slides the image into the region of interest.

In some embodiments, the planogram generation module 207 identifies a shelf of one or more facings that corresponds to a linear group as received from the grouping module 205. When a recognition is applied to the facings on the shelf, the recognitions may slightly become askew relative to each other and/or overlap with each other because of the distortion in the image as described earlier. For example, the recognition items (e.g., based on regions of interest associated with the items) belonging to a shelf can get out of vertical alignment with each other and overlap with other recognition items on the left and/or the right. In some embodiments, the planogram generation module 207 horizontally aligns the edges of items belonging to the shelf. For example, the planogram generation module 207 aligns the bottom edges of the items placed across the shelf. Other types of alignment for items may be possible. For example, if the items are hung from a hang tab on a shelf, the planogram generation module 207 aligns the top edges of the items. In some embodiments, the planogram generation module 207 resolves an overlap between the items on the shelf by moving the items minimally across the shelf such that the items are spaced apart and occupy non-overlapping positions. For example, the planogram generation module 207 shuffles the items horizontally such that the vertical edges of the items do not overlap with each other and are spaced apart from each other. The planogram generation module 207 determines the movement of the items such that the smallest number of the items may be subject to movement and the movement may be as minimal as possible. The planogram generation module 207 moves the items inwards from the left and right edges so as to establish a clear boundary for the overall planogram and to avoid moving the items beyond the planogram boundary.

A planogram that is based on the realogram should be as close to the realogram as possible. In some embodiments, the planogram generation module 207 determines a number of slots in a shelf. A slot is an ordinal position of the recognition associated with an item in that location (or facing) in the shelf. In some embodiments, the planogram generation module 207 generates a numbering of the slots. The numbering can identify which item is in which numbered slot on the shelf. For example, the planogram generation module 207 numbers the slots from left to right (or right to left) of the shelf. The physical dimensions of the realogram and the gaps within the realogram are unknown. For the planogram to be accurate, it is preferable to determine the physical dimensions of the recognized items and the physical width of the gaps. The planogram generation module 207 generates a planogram that preserve the horizontal spacing and the gaps between the non-contiguous and sequentially placed items that are recognized on the set of shelves. A gap is a portion of the shelf that is devoid of recognition associated with an item. For example, the realogram may include an empty spot due to the customers having picked all the products from a stocked facing on the shelf when an image of the shelf was captured. In another example, the realogram may include an empty spot due to an unrecognized item on the shelf. In yet another example, the realogram may include empty spots at the beginning and/or at the end of the shelf. The planogram generation module 207 identifies each of those empty spots as potential horizontal gaps that should be preserved in the planogram. In some embodiments, the planogram generation module 207 individually processes each shelf of the realogram for creating a planogram. This is done to minimize the effects of geometric distortion that may be present in the realogram.

The planogram generation module 207 identifies a subset of the set of recognized items in the realogram and associates the subset of the set of recognized items with a shelf in the realogram. The planogram generation module 207 determines a location (e.g., position in relative X-Y coordinates, a slot position on a shelf, a particular shelf off the ground, etc.) of a number of gaps before a first recognized item, among the subset of the set of recognized items, and following a last recognized item on the shelf. In some embodiments, the planogram generation module 207 generates a numbering of the gaps. For example, the planogram generation module 207 numbers the gaps from left to right (or right to left) of the shelf.

The planogram generation module 207 receives recognition information associated with the one or more recognized items on the shelf from the image processing module 203. For example, the recognition information of an item includes a unique identifier, facing side, and packaging version. The planogram generation module 207 uses the recognition information of the one or more recognized items to look up the product database in the data storage 243 for specific dimensions. The planogram generation module 207 determines the corresponding physical dimensions of the one or more recognized items based on the look up. For example, each combination of a facing side and a packaging version of a recognized item can have its own set of dimensions. A first item identified with a front facing and a second item identified with a side facing, where the first and the second item are of the same UPC, will have two distinct physical widths associated with them. Similarly, a first item identified in a first packaging version and a second item identified in a second packaging version of the same UPC may have two distinct physical widths associated with them.

In some embodiments, the planogram generation module 207 generates a representative planogram from the realogram based on the set of recognized items and their corresponding physical dimensions, and the location of the gaps among the set of recognized items. In some embodiments, the planogram can be symbolic. The planogram generation module 207 saves the planogram information in a file format that can be read back in to make changes to the planogram. For example, the planogram generation module 207 aggregates the product identifier, product name, brand, width, height, facing side, etc. in a comma-separated values (CSV) file to describe the planogram symbolically, where each line of the file corresponds to an item of the planogram.

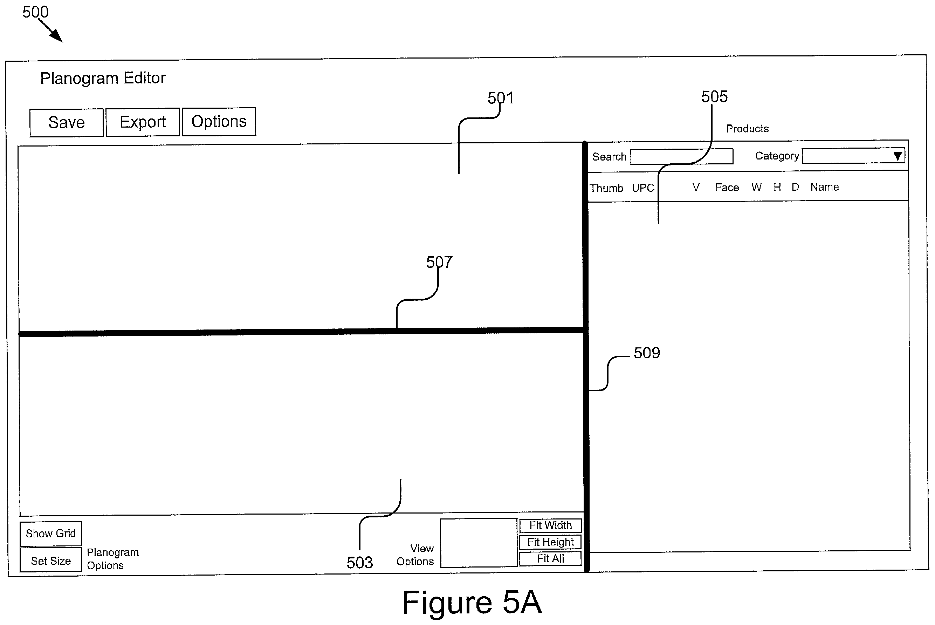

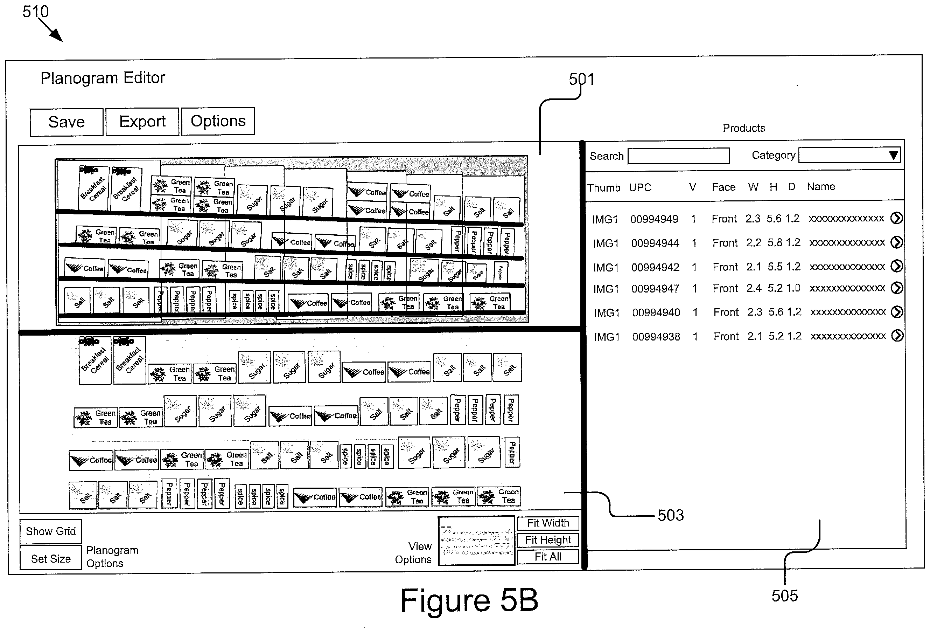

In some embodiments, the planogram generation module 207 sends instructions to the user interface module 209 to generate a user interface for displaying the realogram, the planogram generated by executing the above described series of normalization steps on the realogram, and a product database. The display of the planogram provides a possible visualization that allows a user to further edit the generated planogram and/or supplement the generated planogram. For example, the user can be provided with graphical editing operations such as, drag and drop, cut and paste, and undo and redo for editing the generated planogram. As shown in the example of Figures 5A-5H, the graphical representations illustrate embodiments of a user interface for validating and adjusting a planogram. In Figure 5A, the graphical representation illustrates a layout of different portions of the user interface 500 for validating and adjusting the planogram. The user interface 500 includes a top pane 501 for displaying a realogram, a bottom pane 503 for displaying the corresponding planogram, and a right pane 505 for displaying a tabular representation of a portion of the product database. The top pane 501 and the bottom pane 503 are separated by a first movable divider 507. The top pane 501 and the bottom pane 503 together are separated from the right pane 505 by a second movable divider 509. The first movable divider 507 and the second movable divider 509 may be used by the user to resize the panes or collapse one or more of the panes in the user interface 500. The first movable divider 507 can be moved all the way to the top or to the bottom. The second movable divider 509 can be moved all the way to the left or to the right. In Figure 5B, the graphical representation illustrates another user interface 510 including a realogram in the top pane 501, a corresponding planogram in the bottom pane 503, and a portion of the product database in the right pane 505. The realogram in the top pane 501 is read-only view and the planogram in the bottom pane 503 is editable by the user. The product database in the right pane 505 includes a table of products that are associated with the realogram in the top pane 501 and the planogram in the bottom pane 503. In some embodiments, the table of products in the right pane 505 can be displayed in response to a search for products performed by the user.

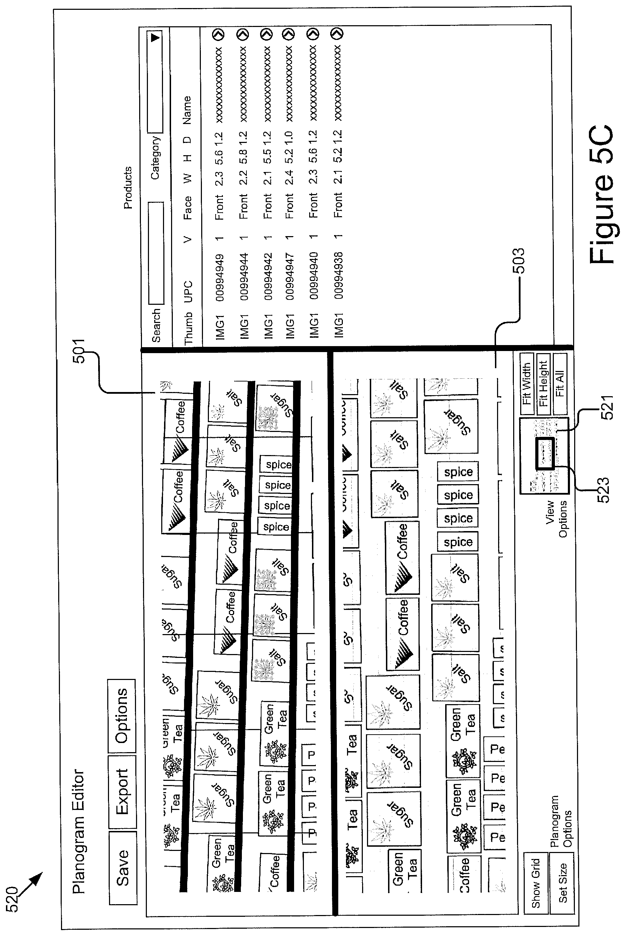

Figure 5C illustrates a graphical representation of another user interface 520 where a view of the realogram in the top pane 501 and a view of the planogram in the bottom pane 503 are shown zoomed in by the user. The user interface 520 includes a navigator 521 with a focus component 523. The size of the focus component 523 indicates the size of the view of the current zoom shown with respect to the realogram in the top pane 501 and the planogram in the bottom pane 503. The relative location of the focus component 523 in the navigator 521 indicates the corresponding location of the view of the current zoom shown with respect to the realogram in the top pane 501 and the planogram in the bottom pane 503. In some embodiments, the planogram generation module 207 receives a user indication associated with viewing of the realogram and the planogram. For example, the focus component 523 is selectable and movable by the user on the navigator 521 to reposition the current zoom over the planogram and/or the realogram. When the user selects the realogram in the top pane 501, the planogram generation module 207 sends instructions to the user interface module 209 to change the context of the display region of the navigator 521 to a context of the realogram. When the user selects the planogram in the bottom pane 503, the planogram generation module 207 sends instructions to the user interface module 209 to change the context of the display region of the navigator 521 to a context of the planogram. The navigator 521 and the focus component 523 together provide a context of the current zoom. For example, the context includes the spatial position or location of the current zoom with respect to the realogram and the planogram. In some embodiments, the planogram generation module 207 links the realogram in the top pane 501 and the planogram in the bottom pane 503 to each other. The planogram generation module 207 sends instructions to the user interface module 209 to sync a view of the realogram in the top pane 501 with a view of the planogram in the bottom pane 503 based on the linking of the realogram and the planogram. For example, the realogram and the planogram stay in sync with each other and mirror the same spatial position or location during the zoom in and/or zoom out operation performed in either the top pane 501 or the bottom pane 503.

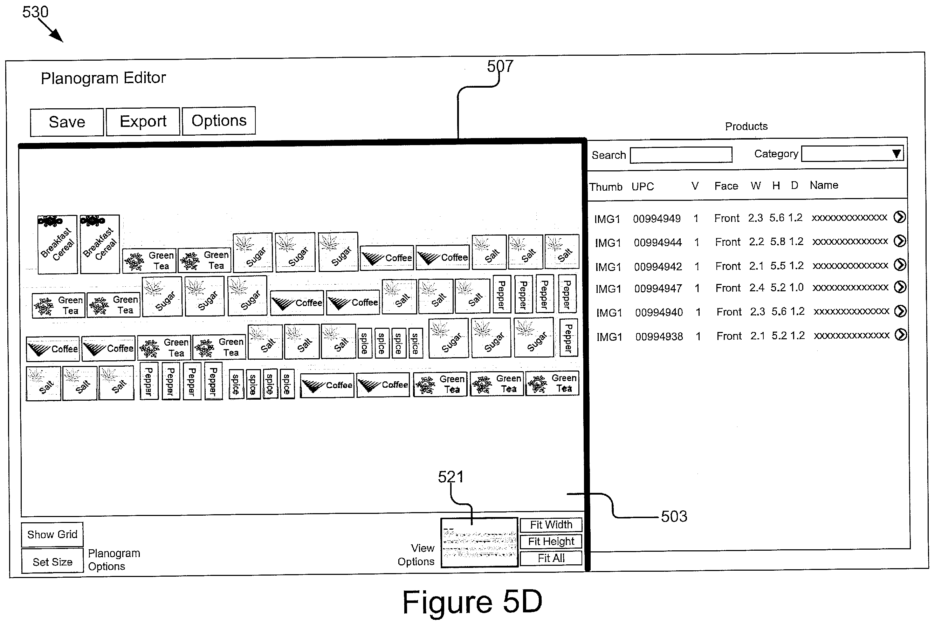

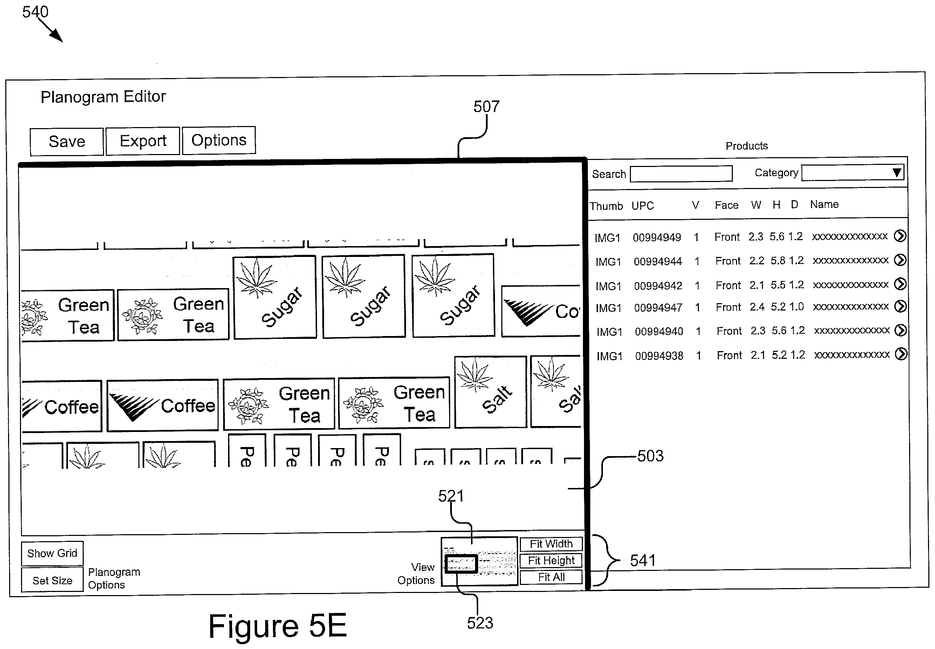

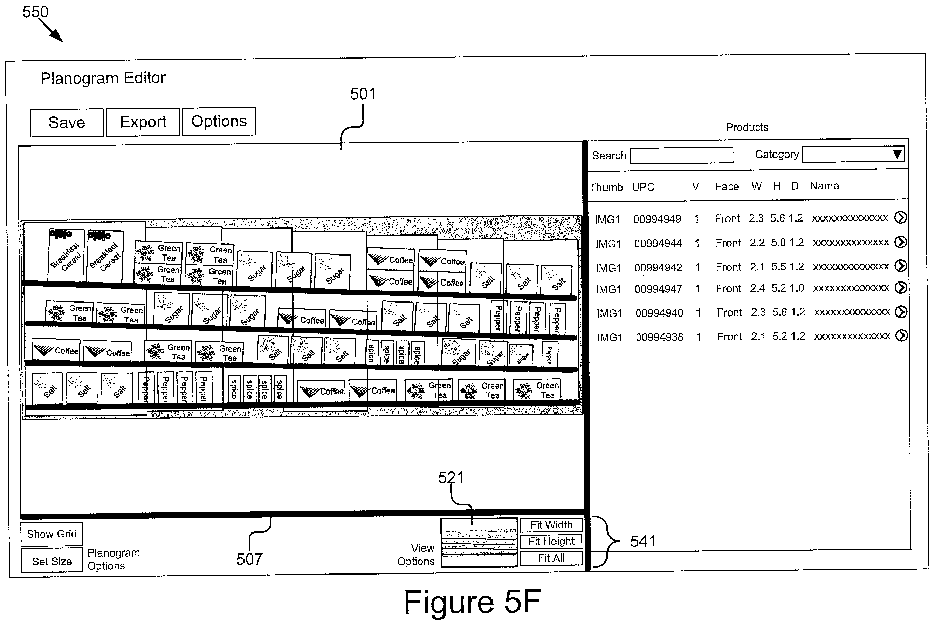

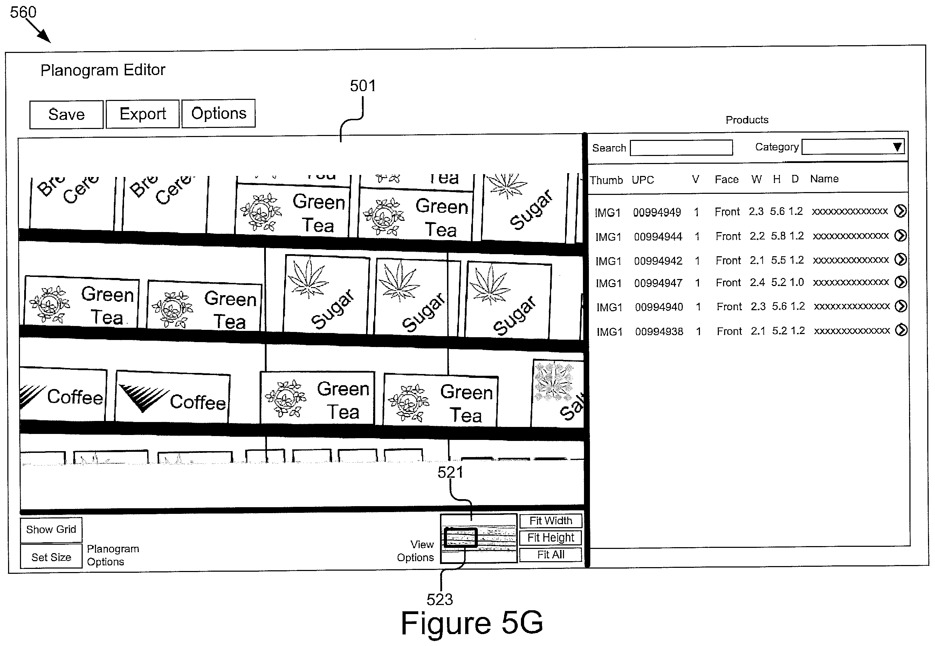

Figure 5D illustrates a graphical representation of a user interface 530 displaying the planogram without the realogram. In the user interface 530, the first movable divider 507 is moved all the way to the top by the user. This action collapses the top pane 501 of Figure 5C leaving the planogram in the bottom pane 503 shown in an expanded view. The navigator 521 changes to show the context of the planogram in the bottom pane 503. Figure 5E illustrates a graphical representation of another user interface 540 where the planogram is shown zoomed in within the bottom pane 503 in the expanded view. The navigator 521 and the focus component 523 together provide a context of the current zoom with respect to the planogram. The user interface 540 includes a set of resizing buttons 541 associated with the bottom pane 503 shown in the expanded view. The resizing buttons 541 include fit width, fit height, and fit all. The fit width selection resizes the planogram to fit the width of the bottom pane 503. The fit height selection resizes the planogram to fit the height of the bottom pane 503. The fit all selection resizes the planogram to fit the whole of the bottom pane 503. One or more of these resizing buttons 541 can be used by the user to pop back the planogram to view within the bottom pane 503 after the planogram has been zoomed in within the bottom pane 503. Figure 5F illustrates a graphical representation of a user interface 550 displaying the realogram without the planogram. In the user interface 550, the first movable divider 507 is moved all the way to the bottom by the user. This action collapses the bottom pane 503 of Figure 5C leaving the realogram in the top pane 501 shown in an expanded view. The navigator 521 changes to show the context of the realogram in the top pane 501. The set of resizing buttons 541 are now associated with the top pane 501 shown in the expanded view. Figure 5G illustrates a graphical representation of another user interface 560 where the realogram is shown zoomed in within the top pane 501 in the expanded view. The navigator 521 and the focus component 523 together provide a context of the current zoom with respect to the realogram.

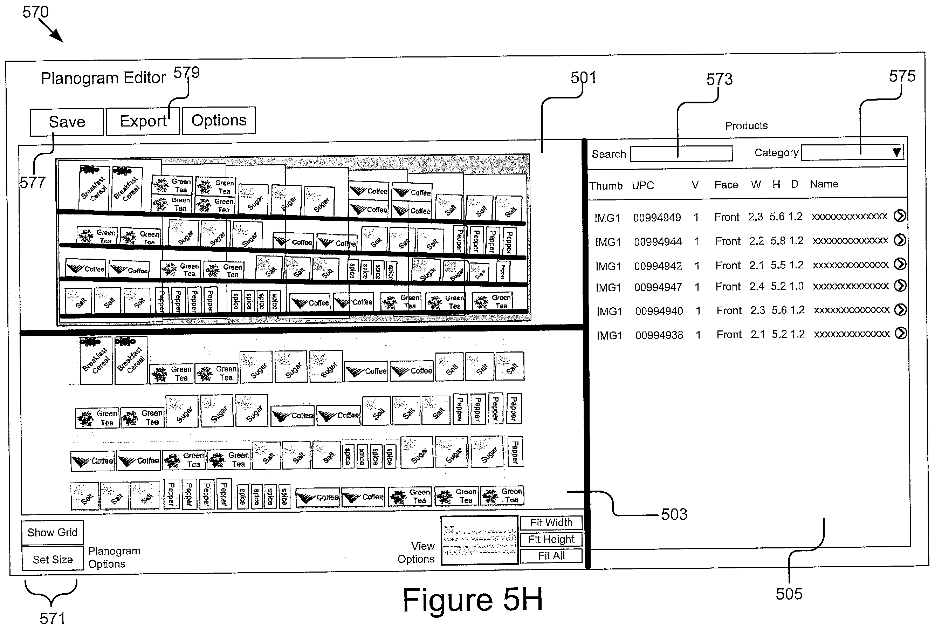

In some embodiments, the planogram generation module 207 receives user input to modify the planogram and the planogram generation module 207 updates the planogram accordingly based on the user input. As shown in the example of Figure 5H, the graphical representation illustrates another user interface 570 for validating, adjusting, and arranging product images in a planogram. In the user interface 570, a product included in the planogram in the bottom pane 503 can be manipulated by the user. For example, the user can remove and/or move any product from one location to another by clicking, dragging, and dropping the product. If a number of products in the planogram appear skewed or misaligned, the user may select all of the products together and request an alignment to be performed on bottom edges of the products. If a number of products appear spread over a length of the shelf in the planogram and with gaps of sizable width between them, the user may select the number of products and request them to be brought together. For example, multiple products of a particular brand (brand chunk) appearing spread over the length of the shelf can be brought together on the planogram. Each product in the planogram is individually selectable by the user. When a product is selected in the planogram by the user for manipulation, the user interface 570 displays a context menu associated with the product to the user. For example, the context menu may include "Properties," "Copy," "Delete," "Align," "Move" etc. as options that are selectable by the user. The user interface 570 includes a set of options 571 associated with the planogram in the bottom pane 503. The set of options 571 include a show grid button and a set size button. If the show grid button is selected by the user, it displays grid lines in the background of the planogram for reference. If the set size button is selected by the user, it displays additional options for setting the size of the shelves in physical dimensions and the number of the shelves in the planogram. In some embodiments, the set size selection normalizes the planogram by grounding the planogram to the bottom left of the bottom pane 503. In some embodiments, the planogram generation module 207 receives a query from the user searching for products in the product database. The user interface 570 includes a search box 573 and a category menu 575 for searching the product database in the right pane 505. The user interface 570 includes a category menu 575 which the user may select to view a list of product categories. In some embodiments, the search box 573 provides the user with incremental search capability and free text search capability. The planogram generation module 207 matches the query with the product database and determines one or more products matching the query in the product database. For example, the user may select toothpaste as a category, search that product category using a query including one or more terms, such as the UPC, brand name, size, color, and/or the product name, and retrieve a table of one or more products matching the search criteria from the product database. The planogram generation module 207 displays the table of one or more products matching the search criteria in the right pane 505.

In some embodiments, the planogram generation module 207 receives a user request to associate a product selected from the product table in the right pane 505 with a gap in the planogram in the bottom pane 503. The planogram generation module 207 receives a selection made by the user to move an image of the product from the product table in the right pane 505 into the gap in the planogram in the bottom pane 503. The planogram generation module 207 updates the planogram by placing the selected product into the gap in the planogram. In some embodiments, the planogram generation module 207 determines whether a width of the gap is large enough to receive the placement of the selected product in the gap. The planogram generation module 207 updates the planogram with the placement of the selected product in the gap if the width of the gap is determined to be large enough. The user can search the tabular representation of the product database as shown in Figure 5H to identify the correct product recognition and fill the gap in the planogram with the correct product. For example, a product listed as an entry in the product table shown in the right pane 505 can be selected, dragged, and dropped by the user into the gap in the planogram in the bottom pane 503. This action translates to placing an image of the selected product item into the gap within the planogram. The planogram generation module 207 associates the gap with the selected product item. The products placed into the planogram take up the right amount of size based on the physical dimensions set for the planogram by the user. In some embodiments, the planogram generation module 207 receives a user request to save the planogram. For example, in Figure 5H, the user can select the Save button 577 to store the planogram in the data storage 243. In some embodiments, the planogram generation module 207 receives a user request to export the planogram for storage in a particular file format. For example, in Figure 5H, when the user selects the Export button 579, the planogram generation module 207 generates a CSV file storing the information of the planogram.

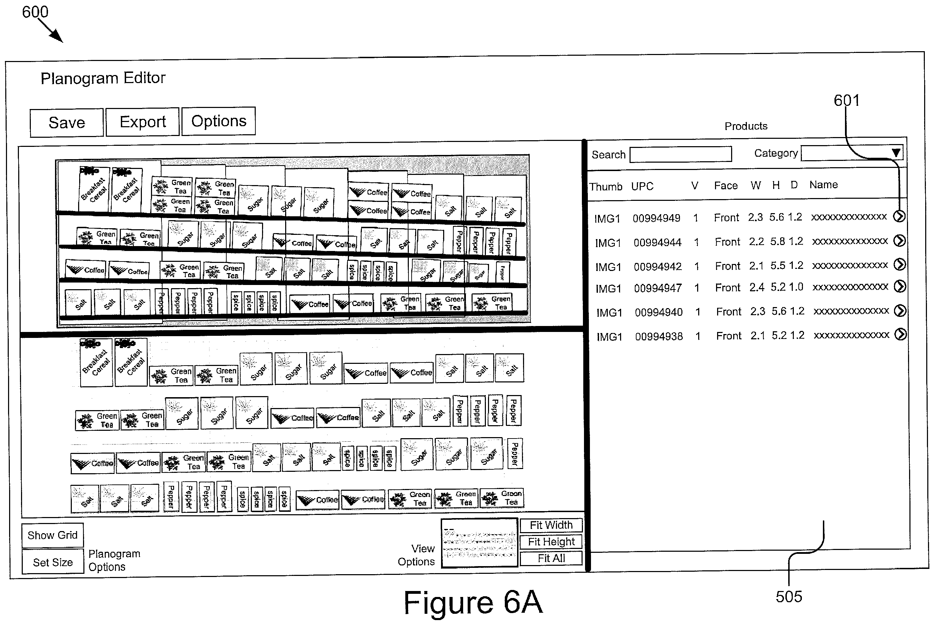

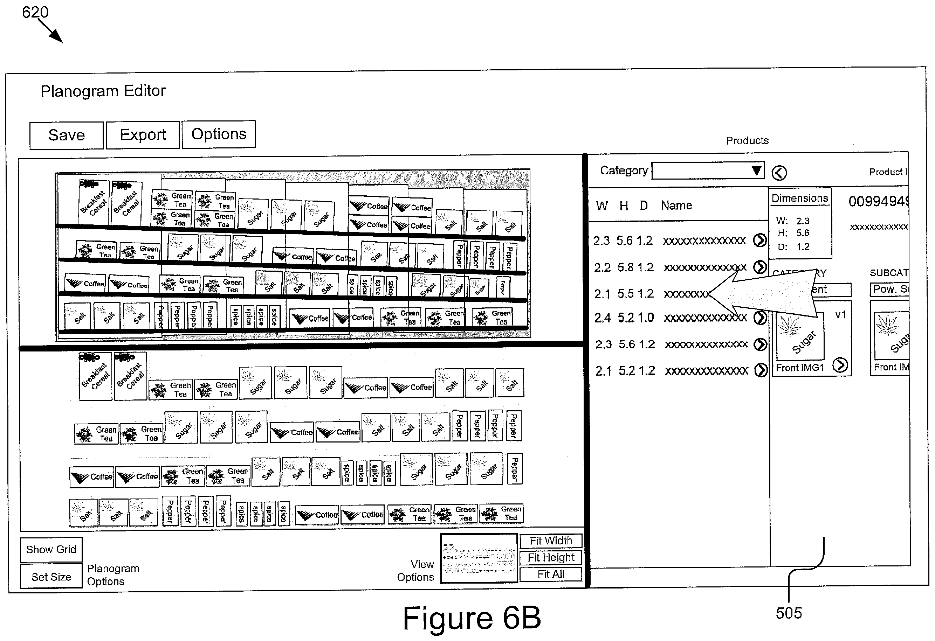

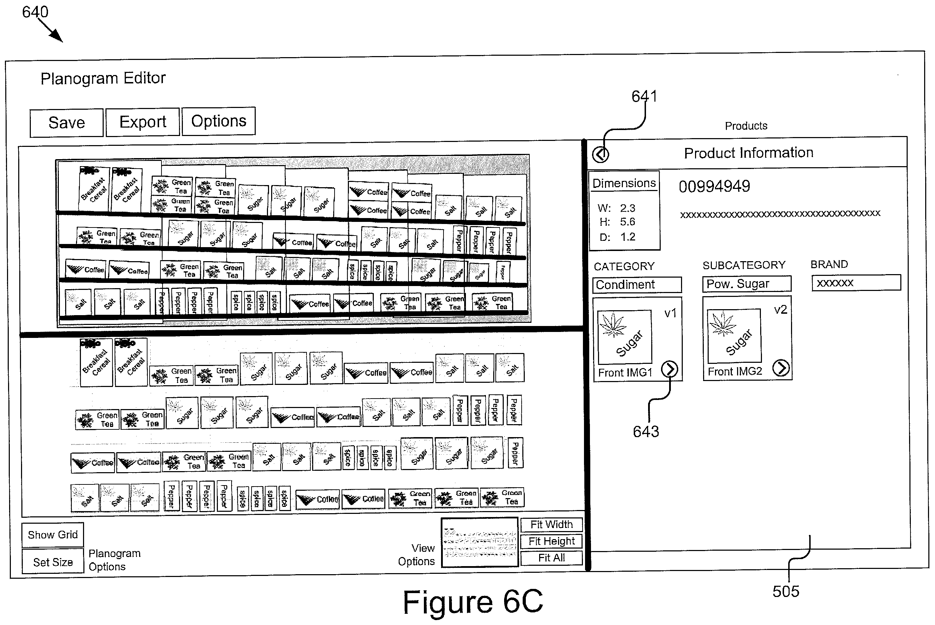

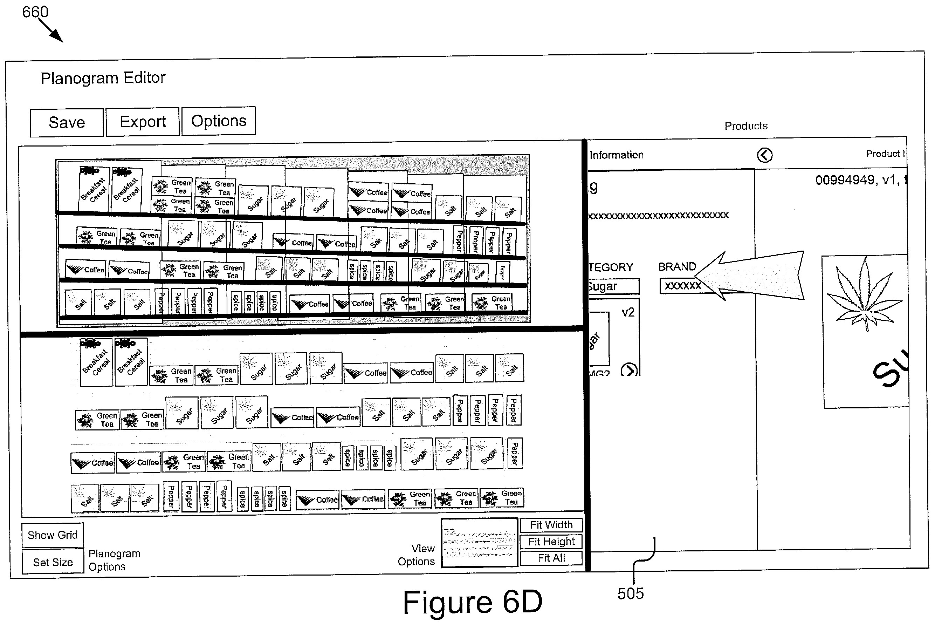

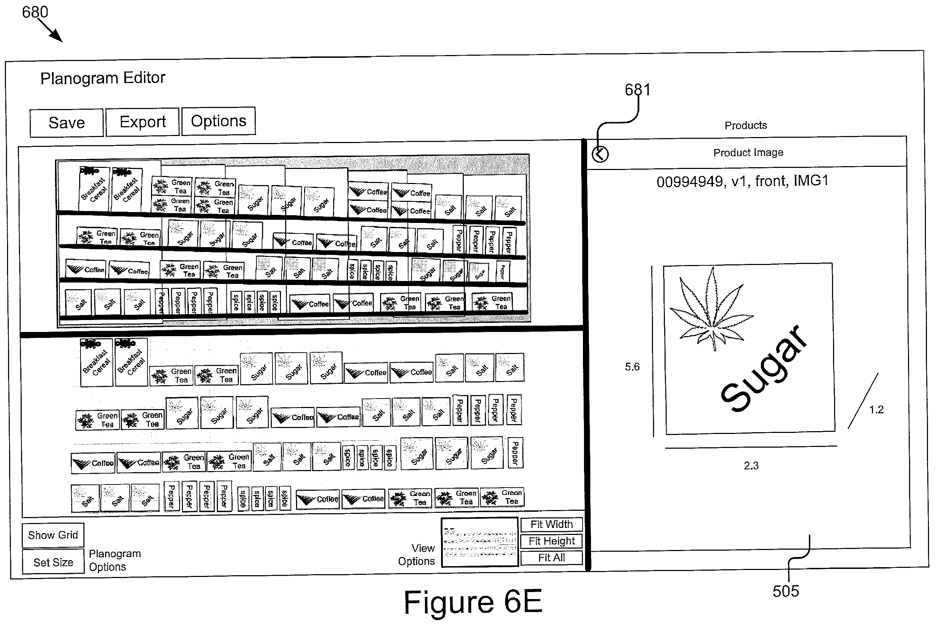

Figures 6A-6E are graphical representations of embodiments of a user interface for displaying information related to the products. In Figure 6A, the graphical representation illustrates a user interface 600 for displaying a product table in the right pane 505. The user interface 600 includes the right pane 505 displaying a table of products. Each row of product table includes a key thumbnail image, a UPC, facing side, width, height, depth, and a name and/or description of a corresponding product. The user interface 600 includes a properties button 601 for learning more about a particular product in each row. Figure 6B illustrates a graphical representation of another user interface 620 that is displayed in response to the user selection of the properties button 601 in Figure 6B. The user interface 620 shows that the right pane 505 slides out the view of the product table to the left as the view of the product information or the product properties for the selected product slides in from the right. Figure 6C illustrates a graphical representation of another user interface 640 displaying the product information in the right pane 505. The product information includes the relevant product information including the dimensions, category, subcategory, brand, version, and one or more product variant images. The user interface 640 includes a product image button 643 for viewing an enlarged version of the product image and a back button 641 to go back to the view of the product table. Figure 6D illustrates a graphical representation of another user interface 660 that is displayed in response to the selection of the product image button 643 in Figure 6C. The user interface 660 shows that the right pane 505 slides out the view of the product information to the left as the view of the enlarged product image for the selected product slides in from the right. Figure 6E illustrates a graphical representation of another user interface 680 displaying the enlarged product image in the right pane 505. The user interface 680 includes the product dimensions of height, width, and depth in the enlarged product image. The user interface 680 also includes a back button 681 to go back to the view of the product information.

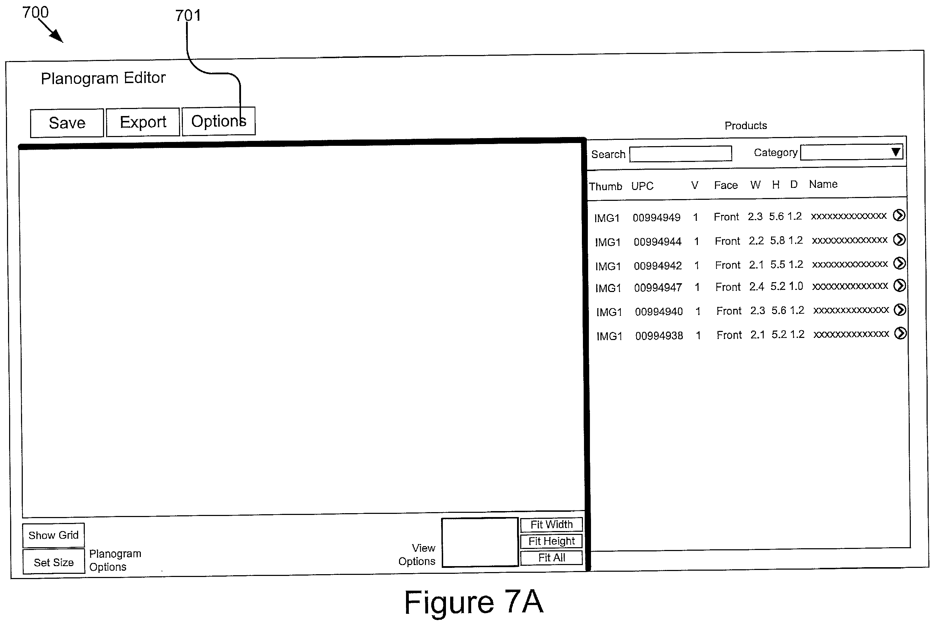

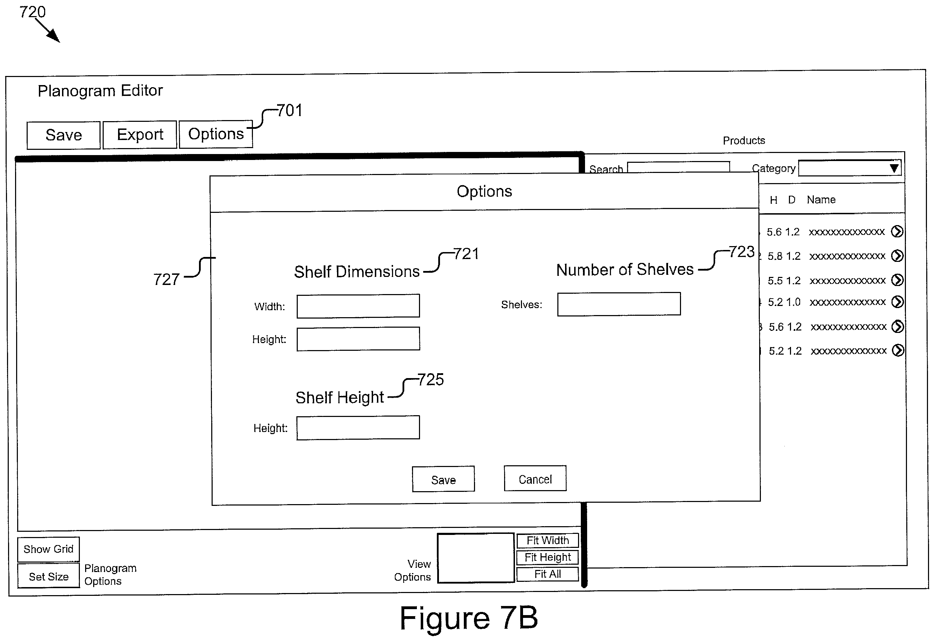

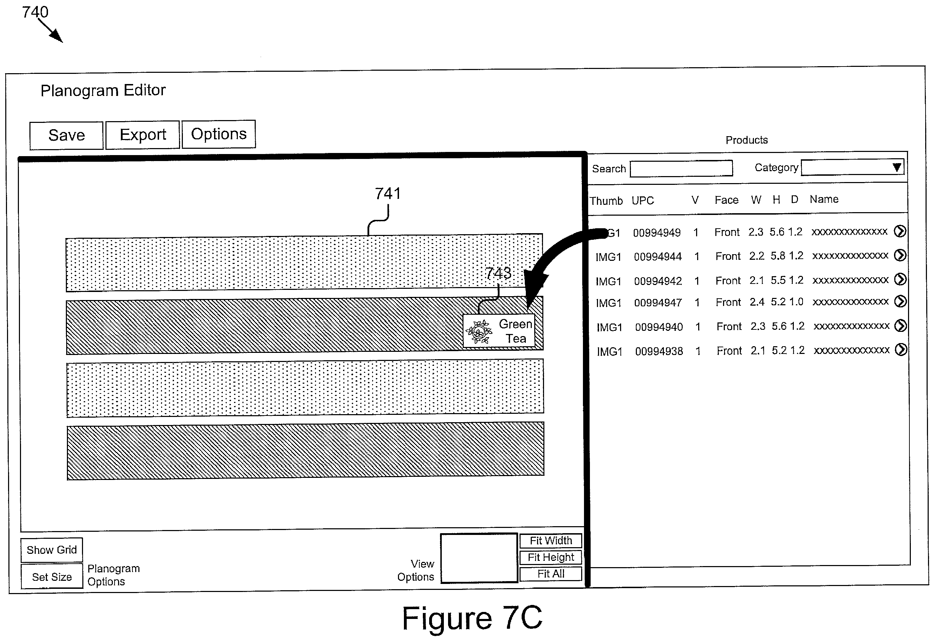

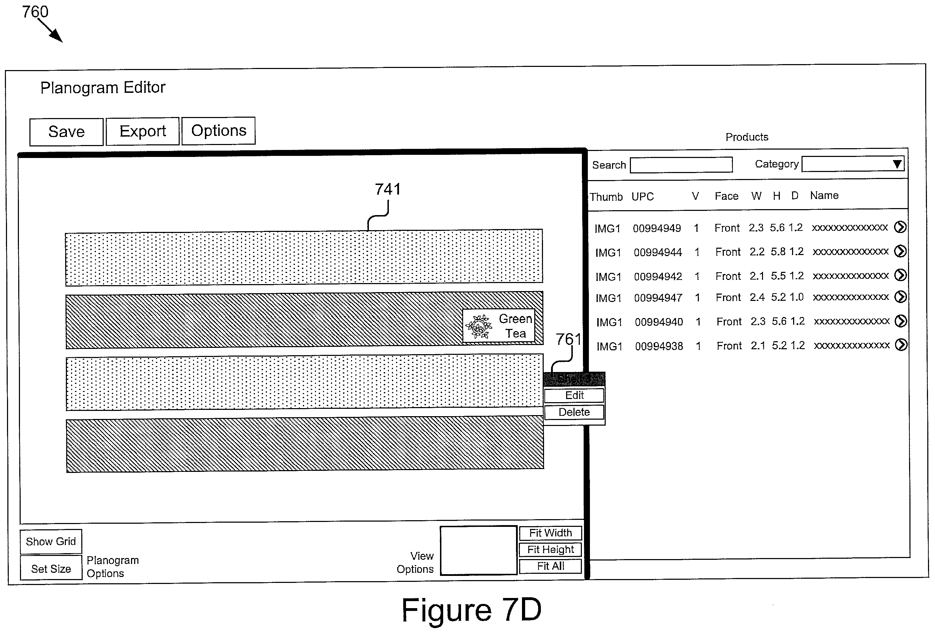

In some embodiments, the planogram generation module 207 receives user input to create a planogram from scratch. As shown in the example of Figures 7A-7D, the graphical representations illustrate embodiments of a user interface for generating a planogram from scratch. In Figure 7A, the graphical representation illustrates a user interface 700 displaying the workspace for creating the planogram. The user interface 700 includes an option tab 701 for configuring the shelves in the planogram and/or for manipulating the entire planogram. Figure 7B illustrates a graphical representation of another user interface 720 that is displayed in response to the user selection of the option tab 701 in Figure 7A. The user interface 720 includes a sub window 727 that lists entries under the shelf configuration inputs including Shelf Dimensions 721, Number of Shelves 723 and the Shelf Height 725. The shelf configurations inputs can be entered by the user and saved. For example, the user may enter shelf dimensions for the planogram to be 8 foot in width and 6 foot in height, the number of shelves to be four and the height of the shelf to be 12 inches. Figure 7C illustrates a graphical representation of a user interface 740 that displays an empty shelf structure 741 for the planogram. The user interface 740 displays the empty shelf structure 741 based on the shelf configuration inputs entered in Figure 7B. The shelf structure 741 may include grid lines for reference. The product 743 can be dragged and dropped by the user into the shelf structure 741 from the product table to create the desired planogram. Figure 7D illustrates a graphical representation of another user interface 760 that displays the shelf structure 741 for the planogram. When a shelf in the shelf structure 741 is selected, the user interface 760 displays a context menu 761 for the shelf. The context menu 761 may include "Edit," "Delete," "Copy," "Align," "Elongate," "Widen," etc. as options that are selectable by the user to perform corresponding operations on the shelf.

In some embodiments, the planogram generation module 207 sends data including the planogram to the user interface module 209. In other embodiments, the planogram generation module 207 stores the data including the planogram in the data storage 243.

The user interface module 209 may include software and/or logic for providing user interfaces to a user. In some embodiments, the user interface module 209 receives instructions from the image processing module 203 to generate a user interface of the realogram on the display of the client device 115. For example, in one embodiment, the realogram may be displayed on the user interface with each of the recognized items on the shelves highlighted with a colored region of interest indicator around the recognized items. It should be understood that the indication of a region of interest can be possible with any kind of visual indicator. In another embodiment, the realogram may be displayed on the user interface with individual recognized items in their relative positions and all non-recognized items (e.g., shelf frame, price tags, non-recognizable product, etc.) hidden or removed. In yet another embodiment, the realogram may be displayed on the user interface with corresponding product images from a database substituted into the regions of interest corresponding to recognized items. In some embodiments, the user interface module 209 receives instructions from the planogram generation module 207 to generate a graphical user interface of the planogram on the display of the client device 115. In some embodiments, the user interface module 209 generates graphical user interface for displaying the product database as a tabular representation for searching by the user. In other embodiments, the user interface module 209 sends graphical user interface data to an application (e.g., a browser) in the client device 115 via the communication unit 241 causing the application to display the data as a graphical user interface.

Figure 8 is a flow diagram illustrating one embodiment of an example method 800 for generating a planogram from a realogram of items on shelves. At 802, the image processing module 203 receives a realogram, the realogram including an image and information about a set of recognized items in the image (e.g., from a client device 115). In some embodiments, the planogram generation module 207 may receive information identifying products or items in an image (e.g., product identification and location information) and the step 502 may be omitted. At 804, the grouping module 205 determines one or more linear groupings of a subset of the set of recognized items corresponding to each shelf. At 806, the planogram generation module 207 generates a planogram based on the realogram and the one or more linear groupings of the subset of the set of recognized items corresponding to each shelf. In some embodiments, the planogram generation module 207 individually processes each shelf of the realogram for creating a planogram. At 808, the user interface module 209 generates a user interface for presentation on a client device of the user. At 810, the user interface module 209 presents the realogram in a first portion of the user interface and the planogram in a second portion of the user interface. At 812, the planogram generation module 207 receives a user input via the user interface from the user. At 814, the planogram generation module 207 updates the planogram based on the user input.

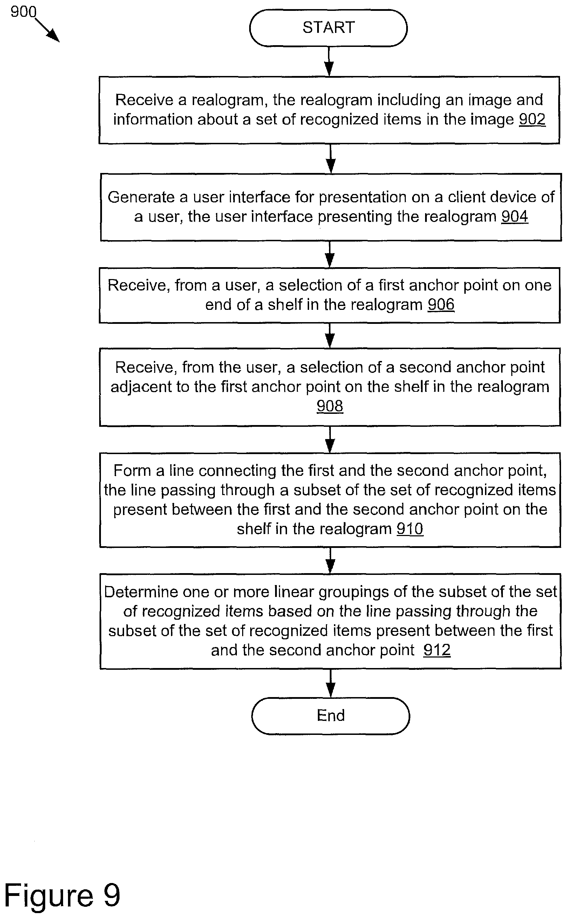

Figure 9 is a flow diagram illustrating one embodiment of an example method 900 for determining one or more linear groupings of items on shelves. At 902, the grouping module 205 receives a realogram, the realogram including an image and information about a set of recognized items in the image (e.g., from the image processing module 203). At 904, the user interface module 209 generates a user interface for presentation on a client device of a user, the user interface presenting the realogram. At 906, the grouping module 205 receives a selection of a first anchor point on one end of a shelf in the realogram from the user. At 908, the grouping module 205 receives a selection of a second anchor point adjacent to the first anchor point on the shelf in the realogram from the user. At 910, the grouping module 205 forms a line connecting the first and the second anchor point, the line passing through a subset of the set of recognized items present between the first and the second anchor point on the shelf in the realogram. At 912, the grouping module 205 determines one or more linear groupings of the subset of the set of recognized items based on the line passing through the subset of the set of recognized items present between he first and the second anchor point.

A system and method for generating a planogram has been described. In the above description, for purposes of explanation, numerous specific details are set forth in order to provide a thorough understanding of the techniques introduced above. It will be apparent, however, to one skilled in the art that the techniques can be practiced without these specific details. In other instances, structures and devices are shown in block diagram form in order to avoid obscuring the description and for ease of understanding. For example, the techniques are described in one embodiment above primarily with reference to software and particular hardware. However, the present invention applies to any type of computing system that can receive data and commands, and present information as part of any peripheral devices providing services.

Reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

Some portions of the detailed descriptions described above are presented in terms of algorithms and symbolic representations of operations on data bits within a computer memory. These algorithmic descriptions and representations are, in some circumstances, used by those skilled in the data processing arts to convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing", "computing", "calculating", "determining", "displaying", or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The techniques also relate to an apparatus for performing the operations herein. This apparatus may be specially constructed for the required purposes, or it may comprise a general-purpose computer selectively activated or reconfigured by a computer program stored in the computer. Such a computer program may be stored in a non-transitory computer readable storage medium, such as, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory or any type of media suitable for storing electronic instructions, each coupled to a computer system bus.

Some embodiments can take the form of an entirely hardware embodiment, an entirely software embodiment or an embodiment containing both hardware and software elements. One embodiment is implemented in software, which includes but is not limited to firmware, resident software, microcode, etc.

Furthermore, some embodiments can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

A data processing system suitable for storing and/or executing program code can include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description above. In addition, the techniques are not described with reference to any particular programming language. It will be appreciated that a variety of programming languages may be used to implement the teachings of the various embodiments as described herein.

The foregoing description of the embodiments has been presented for the purposes of illustration and description. It is not intended to be exhaustive or to limit the specification to the precise form disclosed. Many modifications and variations are possible in light of the above teaching. It is intended that the scope of the embodiments be limited not by this detailed description, but rather by the claims of this application. As will be understood by those familiar with the art, the examples may be embodied in other specific forms without departing from the spirit or essential characteristics thereof. Likewise, the particular naming and division of the modules, routines, features, attributes, methodologies and other aspects are not mandatory or significant, and the mechanisms that implement the description or its features may have different names, divisions and/or formats. Furthermore, as will be apparent to one of ordinary skill in the relevant art, the modules, routines, features, attributes, methodologies and other aspects of the specification can be implemented as software, hardware, firmware or any combination of the three. Also, wherever a component, an example of which is a module, of the specification is implemented as software, the component can be implemented as a standalone program, as part of a larger program, as a plurality of separate programs, as a statically or dynamically linked library, as a kernel loadable module, as a device driver, and/or in every and any other way known now or in the future to those of ordinary skill in the art of computer programming. Additionally, the specification is in no way limited to embodiment in any specific programming language, or for any specific operating system or environment. Accordingly, the disclosure is intended to be illustrative, but not limiting, of the scope of the specification, which is set forth in the following claims.

The present application is based on U.S. Provisional Patent Application No. 62/484,539, filed April 12, 2017 and entitled "Realogram to Planogram User Interface"; and U.S. Patent Application No. 15/640,398, filed June 30, 2017 and entitled "Realogram to Planogram User Interface." U.S. Provisional Patent Application No. 62/484,539 and U.S. Patent Application No. 15/640,398 are incorporated herein by reference in their entirety.

## Claims

1. A method comprising:
receiving, from an image processing module, a realogram, the realogram including an image and information about a set of recognized items in the image;
determining one or more linear groupings of a subset of the set of recognized items corresponding to each shelf;
generating a planogram based on the realogram and the one or more linear groupings of the subset of the set of recognized items corresponding to each shelf;
generating a user interface for presentation on a client device of a user;
presenting the realogram in a first portion of the user interface and the planogram in a second portion of the user interface;
receiving, from the user, user input via the user interface; and
updating the planogram based on the user input.

2. The method of claim 1, further comprising:
linking the realogram and the planogram;
receiving a user indication associated with a viewing of the realogram and the planogram via the user interface; and
syncing a first view of the realogram in the first portion of the user interface with a second view of the planogram in the second portion of the user interface, such that the realogram and the planogram mirror the same spatial location based on the linking.

3. The method of claim 1, wherein determining the one or more linear groupings of the subset of the set of recognized items corresponding to each shelf comprises:
receiving, from the user, a selection of a first anchor point on one end of each shelf in the realogram;
receiving, from the user, a selection of a second anchor point adjacent to the first anchor point on each shelf in the realogram;
forming a line connecting the first and the second anchor point, the line passing through a subset of the set of recognized items present between the first and the second anchor point on each shelf in the realogram; and
determining one or more linear groupings of the subset of the set of recognized items based on the line passing through the subset of the set of recognized items present between the first and the second anchor point.

4. The method of claim 3, further comprising:
highlighting the one or more linear groupings of the subset of the set of recognized items.

5. The method of claim 3, further comprising:
determining whether the one or more linear groupings of the subset of the set of recognized items fail to include one or more recognized items on each shelf in the realogram;
responsive to determining that the one or more linear groupings of the subset of the set of recognized items fail to include the one or more recognized items on each shelf in the realogram, receiving a selection of a third anchor point adjacent to the second anchor point on each shelf in the realogram; and
extending the line to connect the third anchor point with the first and the second anchor point, the line passing through the one or more recognized items on each shelf in the realogram.

6. The method of claim 1, further comprising:
receiving, from the user, a search query including one or more terms;
matching the search query with a product database;
determining a table including one or more items based on matching the search query with the product database; and
presenting the table including the one or more items in a third portion of the user interface.

7. The method of claim 6, further comprising:
receiving, on the third portion of the user interface, user selection to move an image of the one or more items from the table into a gap in the planogram in the second portion of the user interface;
determining whether physical dimensions of the gap in the planogram satisfies physical dimensions corresponding to the one or more items; and
responsive to determining that the physical dimensions of the gap in the planogram satisfies the physical dimensions corresponding to the one or more items, placing the image of the one or more items from the table into the gap in the planogram in the second portion of the user interface.

8. A system comprising:
one or more processors; and
a memory, the memory storing instructions, which when executed cause the one or more processors to:
receive a realogram, the realogram including an image and information about a set of recognized items in the image;
determine one or more linear groupings of a subset of the set of recognized items corresponding to each shelf;
generate a planogram based on the realogram and the one or more linear groupings of the subset of the set of recognized items corresponding to each shelf;
present the realogram in a first portion of the user interface and the planogram in a second portion of the user interface;
receive, from the user, user input via the user interface; and
update the planogram based on the user input.

9. The system of claim 8, wherein the instructions further cause the one or more processors to:
link the realogram and the planogram;
receive a user indication associated with a viewing of the realogram and the planogram via the user interface; and
sync a first view of the realogram in the first portion of the user interface with a second view of the planogram in the second portion of the user interface, such that the realogram and the planogram mirror the same spatial location based on the linking.

10. The system of claim 8, wherein to determine the one or more linear groupings of the subset of the set of recognized items corresponding to each shelf, the instructions further cause the one or more processors to:
receive, from the user, a selection of a first anchor point on one end of each shelf in the realogram;
receive, from the user, a selection of a second anchor point adjacent to the first anchor point on each shelf in the realogram;
form a line connecting the first and the second anchor point, the line passing through a subset of the set of recognized items present between the first and the second anchor point on each shelf in the realogram; and
determine one or more linear groupings of the subset of the set of recognized items based on the line passing through the subset of the set of recognized items present between the first and the second anchor point.

11. The system of claim 10, wherein the instructions further cause the one or more processors to:
determine whether the one or more linear groupings of the subset of the set of recognized items fail to include one or more recognized items on each shelf in the realogram;
responsive to determining that the one or more linear groupings of the subset of the set of recognized items fail to include the one or more recognized items on each shelf in the realogram, receive a selection of a third anchor point adjacent to the second anchor point on each shelf in the realogram; and
extend the line to connect the third anchor point with the first and the second anchor point, the line passing through the one or more recognized items on each shelf in the realogram.

12. The system of claim 8, wherein the instructions further cause the one or more processors to:
receive, from the user, a search query including one or more terms;
match the search query with a product database;
determine a table including one or more items based on matching the search query with the product database; and
present the table including the one or more items in a third portion of the user interface.

13. The system of claim 12, wherein the instructions further cause the one or more processors to:
receive, on the third portion of the user interface, user selection to move an image of the one or more items from the table into a gap in the planogram in the second portion of the user interface;
determine whether physical dimensions of the gap in the planogram satisfies physical dimensions corresponding to the one or more items; and
responsive to determining that the physical dimensions of the gap in the planogram satisfies the physical dimensions corresponding to the one or more items, place the image of the one or more items from the table into the gap in the planogram in the second portion of the user interface.

14. A method comprising:
receiving, from an image processing module, a realogram, the realogram including an image and information about a set of recognized items in the image;
generating a user interface for presentation on a client device of a user, the user interface presenting the realogram;
receiving, from the user, a selection of a first anchor point on one end of a shelf in the realogram;
receiving, from the user, a selection of a second anchor point adjacent to the first anchor point on the shelf in the realogram;
forming a line connecting the first and the second anchor point, the line passing through a subset of the set of recognized items present between the first and the second anchor point on the shelf in the realogram; and
determining one or more linear groupings of the subset of the set of recognized items based on the line passing through the subset of the set of recognized items present between the first and the second anchor point.

15. The method of claim 14, further comprising:
determining whether the one or more linear groupings of the subset of the set of recognized items fail to include one or more recognized items on the shelf in the realogram;
responsive to determining that the one or more linear groupings of the subset of the set of recognized items fail to include the one or more recognized items on the shelf in the realogram, receiving a selection of a third anchor point adjacent to the second anchor point on the shelf in the realogram; and
extending the line to connect the third anchor point with the first and the second anchor point, the line passing through the one or more recognized items on the shelf in the realogram.
